(19) Europäisches Patentamt
European Patent Office
Office européen des brevets

(11) **EP 3 377 798 B1**

(12) **EUROPÄISCHE PATENTSCHRIFT**

(45) Veröffentlichungstag und Bekanntmachung des Hinweises auf die Patenterteilung:
**01.04.2020 Patentblatt 2020/14**

(21) Anmeldenummer: **16797876.6**

(22) Anmeldetag: **16.11.2016**

(51) Int Cl.:
**F16L 37/34** *(2006.01)*    **F16L 37/00** *(2006.01)*
**F16L 37/62** *(2006.01)*

(86) Internationale Anmeldenummer:
**PCT/EP2016/077865**

(87) Internationale Veröffentlichungsnummer:
**WO 2017/085130 (26.05.2017 Gazette 2017/21)**

(54) **KUPPLUNGSMUFFE FÜR EINE HYDRAULIKKUPPLUNG**

COUPLING SLEEVE FOR A HYDRAULIC COUPLING

MANCHON D'ACCOUPLEMENT POUR ACCOUPLEMENT HYDRAULIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.11.2015 DE 102015222639**

(43) Veröffentlichungstag der Anmeldung:
**26.09.2018 Patentblatt 2018/39**

(73) Patentinhaber: **U.M. Gewerbeimmobilien GmbH & Co. KG**
**58791 Werdohl (DE)**

(72) Erfinder:
• **LAUFER, Klaus**
**58540 Meinerhagen (DE)**

• **FIRUS, Artur**
**58638 Iserlohn (DE)**

(74) Vertreter: **Patentanwälte Dörner & Kötter PartG mbB**
**Körnerstrasse 27**
**58095 Hagen (DE)**

(56) Entgegenhaltungen:
**EP-A2- 0 174 210      EP-A2- 1 273 844**
**DE-A1- 4 002 226      DE-U- 7 301 408**
**FR-A- 1 561 337       FR-A- 1 577 931**
**US-A1- 2004 251 684**

EP 3 377 798 B1

**Beschreibung**

Die Erfindung betrifft eine Kupplungsmuffe für eine Hydraulikkupplung einer Druckmittelleitung zum Herstellen einer formschlüssigen Verbindung mit einem Kupplungsstecker gemäß dem Oberbegriff des Patentanspruchs 1.

Hydraulikkupplungen, nämlich eine Kombination aus Kupplungsmuffe und Kupplungsstecker, dienen dem Verbinden von zwei Abschnitten einer Druckmittelleitung und werden insbesondere dazu verwendet, hydraulische Geräte an eine Hydraulikquelle anzuschließen, beispielsweise zum Anschließen eines Werkzeugs oder Anbaugerätes an eine landwirtschaftliche Maschine oder eine Baumaschine.

Aus dem Stand der Technik sind sogenannte flachdichtende Kupplungsmuffen und Kupplungsstecker bekannt, beispielsweise nach ISO 16028 (Stand: Dezember 1999 mit Änderungen aus Januar 2006), die sich dadurch auszeichnen, dass im nicht verbundenen - entkuppelten - Zustand durch die Bauteile des Kupplungssteckers oder der Kupplungsmuffe im Schnittstellenbereich eine plane und geschlossene Fläche gebildet wird. Diese plane Fläche kann vor dem Einkuppeln leicht gereinigt werden, was den Eintritt von Schmutz in das Gehäuse und zwischen die Bauteile verhindert. Außerdem weisen diese Kupplungen im Gegensatz zu Kupplungen mit Kegelventil, beispielsweise nach ISO 7241 (Stand: 15. Juli 2014), nur einen minimalen Druckmittelverlust - Ölverlust - beim Entkuppelvorgang auf. Derartige flachdichtende Hydraulikkupplungen eignen sich insbesondere für den Einsatz in Umgebungen, in denen ein Druckmittelaustritt problematisch ist.

Ferner wird unterschieden zwischen solchen Hydraulikkupplungen, die durch Betätigung einer außenliegenden Schiebemuffe entkuppelt werden, und solchen, die bei Überschreiten einer vorbestimmten Relativkraft zwischen Kupplungsstecker und Kupplungsmuffe selbsttätig entkuppeln und gleichzeitig die Strömungskanäle an der Kupplungsmuffe bzw. dem Kupplungsstecker schlie-ßen. Dadurch wird ein Verlust an Druckmittel vermieden.

Aus der EP 1 273 844 B1 ist beispielsweise eine flachdichtende Hydraulickupplung mit einem Kupplungsstecker und einer Kupplungsmuffe bekannt, bei der ein Entkuppeln, also ein Trennen des Kupplungssteckers und der Kupplungsmuffe dadurch erfolgt, dass Relativkraft zwischen Kupplungsstecker und Kupplungsmuffe aufgebracht wird. Eine weitere Hydraulikkupplung ist in der FR 1577931 A offenbart.

Das Einkuppeln einer Hydraulikkupplung, also das Herstellen einer formschlüssigen Verbindung zwischen einer Kupplungsmuffe und einem Kupplungsstecker, erfolgt üblicherweise dadurch, dass der Kupplungsstecker durch einen Benutzer in die Kupplungsmuffe eingesteckt wird, wobei durch die durch den Benutzer aufgebrachte Kraft sowohl jeweils mindestens ein Ventil geöffnet wird, um eine Druckmittelleitung an dem Kupplungsstecker mit einer Druckmittelleitung an der Kupplungsmuffe strömungstechnisch zu verbinden als auch eine formschlüssige Verbindung zwischen Kupplungsstecker und Kupplungsmuffe hergestellt wird, um die Verbindung bzw. den eingekuppelten Zustand zu stabilisieren.

Aus dem Stand der Technik bekannte Hydraulikkupplungen weisen allerdings den Nachteil auf, dass für einen Benutzer nicht erkennbar ist, ob und welcher Druck beispielsweise an dem Kupplungsstecker oder der Kupplungsmuffe anliegt, wenn ein Werkzeug an eine Hydraulikquelle angeschlossen werden soll, woraus ein Sicherheitsrisiko für den Benutzer resultiert.

Dem zuständigen Fachmann stellt sich daher die Aufgabe eine Kupplungsmuffe, insbesondere für eine Hydraulikkupplung, anzugeben, die in Bezug auf die Sicherheit und Bedienungsfreundlichkeit verbessert ist.

Die vorgenannte Aufgabe bei einer gattungsgemäßen Kupplungsmuffe für eine Hydraulikkupplung gelöst mit den Merkmalen des Kennzeichnungsteils des Patentanspruchs 1, nämlich indem die Größe der Flächen, insbesondere der Flächen der Druckhülse, von denen zumindest in der Schließposition der Druckhülse bei einem im Strömungskanal vorhandenen Druck p eines Druckmittels mittelbar oder unmittelbar eine Kraft auf die Druckhülse in Richtung der Schließposition resultiert, derart gewählt ist, dass bei einem vorbestimmten, oberen Druckwert des Drucks p ein vorbestimmter erster Schwellenwert der Kuppelkraft der Kupplungsmuffe überschritten wird, um ein Herstellen einer formschlüssigen Verbindung mit einem Kupplungsstecker durch einen Benutzer zu verhindern.

Die Kupplungsmuffe umfasst ein, vorzugsweise zylindrisches, Gehäuse, in dem die Bauteile der Kupplungsmuffe angeordnet sind. Das Gehäuse begrenzt einen Strömungskanal für ein Druckmittel zumindest teilweise und erstreckt sich bevorzugt rotationssymmetrisch um eine längs verlaufende Kupplungsachse. Das Gehäuse weist an einem ersten Ende einen Anschluss, insbesondere einen Schraubanschluss, zur Verbindung des Strömungskanals mit einer Druckmittelleitung auf. An dem Gehäuse, entlang der Kupplungsachse, gegenüberliegend zu dem Schraubanschluss, nämlich an dem zweiten Ende des Gehäuses, ist die Kupplungsmuffe vorteilhaft flachdichtend gestaltet, so dass das Gehäuse im ungekuppelten Zustand mit den innenliegenden Bauteilen eine plane Fläche ausbildet. Diese Fläche ist die Schnittstelle zum Kupplungsstecker.

Innerhalb des Gehäuses ist eine Dichteinheit angeordnet, die vorzugsweise alle beweglichen Bauteile der Kupplungsmuffe innerhalb des Gehäuses umfasst. Beispielsweise ist die Dichteinheit über die Gehäuseöffnung am zweiten Ende des Gehäuses in das Gehäuse eingeschoben und wird innerhalb des Gehäuses durch eine Sperrhülse gehalten. Vorzugsweise ist die Druckhülse zwischen einer ersten Position - im ungekuppelten Zustand - und einer zweiten Position - um eingekuppelten Zustand - in Gehäuse verschiebbar. Die Sperrhülse ist endseitig fest mit dem Gehäuse verbunden, z. B. mit dem Gehäuse verschraubt. Beispielweise ist die Sperrhülse über ein an ihrem Umfang ausgebildetes Gewinde mit einem korrespondierenden Gewinde am Innenumfang des Gehäuses verschraubt, wobei zusätzlich mindestens eine Dichtung, insbesondere mindestens ein O-Ring, zwischen der Sperrhülse und dem Gehäuse angeordnet ist.

Die Dichteinheit umfasst einen Muffenkörper, eine Druckhülse und einen Ventilstößel. Die Dichteinheit begrenzt einen Teil des Strömungskanals innerhalb des Gehäuses, wobei der Strömungskanal zumindest teilweise von dem Muffenkörper der Dichteinheit begrenzt wird. Der Muffenkörper weist vorzugsweise auf seinem Außenumfang mindestens zwei Dichtbereiche mit jeweils mindestens einer Dichtung auf, die dichtend an einem zugehörigen Innenumfang des Gehäuses anliegen. Vorzugsweise sind die Dichtbereiche auf unterschiedlichen Durchmessern des Muffenkörpers vorgesehen.

Der Ventilstößel ist mittels einer Stößelführung derart am Muffenkörper gehalten, dass der Ventilstößel, vorteilhaft zentral, im Strömungskanal angeordnet ist, wodurch der Ventilstößel umlaufend von dem Strömungskanal umgeben ist. Die Stößelführung weist bevorzugt eine Mehrzahl an Ausnehmungen auf, die von dem Druckmittel durchströmt werden können, und die somit einen Teil des Strömungskanals bilden. Vorteilhaft ist der Ventilstößel mit der Stößelführung verschraubt oder verspannt.

Die Druckhülse der Dichteinheit ist derart angeordnet, dass sie den Ventilstößel umgibt. Ferner ist die Druckhülse entlang der Kupplungsachse verschiebbar zwischen einer Schließposition, in der der Strömungskanal durch die Druckhülse verschlossen wird, und einer Öffnungsposition, in der die Druckhülse den Strömungskanal freigibt, gehalten. Die Druckhülse ist hohlzylinderförmig ausgebildet und weist vorzugsweise entlang ihrer Längserstreckung unterschiedliche Wandstärken auf. So ist beispielsweise vorgesehen, dass die Wandstärke im Bereich einer in Richtung der Öffnungsposition gerichteten, ersten Stirnfläche am größten ist. Ferner ist auch vorgesehen, dass die Wandstärke, ausgehend von der Wandstärke im Bereich der ersten Stirnfläche, insbesondere stufenweise, in Richtung der Schließposition orientierten, zweiten Stirnfläche abnimmt. Insbesondere ist die Wandstärke der Druckhülse im Bereich der zweiten Stirnfläche am geringsten.

Die Druckhülse umgibt den Ventilstößel bevorzugt derart, dass die in Richtung der Schließposition gerichtete, zweite Stirnfläche der Druckhülse in der Schließposition in einer Ebene mit der außenliegenden Stirnfläche des Ventilstößels liegt. Die zweite Stirnfläche ist im ungekuppelten Zustand der Kupplungsmuffe dann zusammen mit der außenliegenden Stirnfläche des Ventilstößels ein Teil der flachdichtenden Fläche am zweiten Ende des Gehäuses. In der Schließposition der Druckhülse erfolgt eine Abdichtung zwischen einem, bevorzugt gegenüber dem Schaft des Ventilstößels erweiterten, Außenumfang des Ventilstößels, dem Ventilstößelkopf, und einer Innenfläche der Druckhülse. Zwischen dem Ventilstößel und der Druckhülse, insbesondere zwischen dem Innenumfang der Druckhülse und dem Außenumfang des Ventilstößels, ist mindestens eine umlaufende Dichtung angeordnet.

Alternativ dazu ist vorgesehen, dass die Druckhülse in ihrer Schließposition zumindest mittelbar an dem Ventilstößel, insbesondere an einem Ventilstößelkopf, anliegt, so dass eine Kraft parallel zur Kupplungsachse von der Druckhülse auf den Ventilstößel bewirkt wird. In diesem Fall ist die zweite Stirnfläche nicht Teil der außenliegenden Stirnfläche. In der Schließposition erfolgt eine Abdichtung zwischen einer, vorzugsweise konischen, Fläche des Ventilstößelkopfes und einer, vorzugsweise konischen, Fläche der Druckhülse. Vorzugsweise ist an dem Ventilstößelkopf zusätzlich eine Dichtung vorgesehen, die in der Schließposition der Druckhülse an einem Innenumfang der Druckhülse anliegt.

Aus der Schließposition ist die Druckhülse entgegen der Kraft einer Druckfeder in Richtung einer Öffnungsposition verschiebbar, wodurch der Strömungskanal zwischen Druckhülse und Ventilstößel durch die Druckhülse freigegeben wird. Die Druckhülse wird vorzugsweise mittelbar oder unmittelbar durch die von einem Benutzer über einen Kupplungsstecker aufgebrachte Kraft in ihre Freigabeposition verschoben.

Um eine formschlüssige Verbindung zwischen einem Kupplungsstecker und einer Kupplungsmuffe herzustellen und so die Strömungskanäle der Kupplungsmuffe und des Kupplungssteckers zu verbinden - einzukuppeln -, wird ein Kupplungsstecker durch einen Benutzer mit seinem Steckergrundkörper an die Kupplungsmuffe angesetzt, insbesondere an die flachdichtende Stirnfläche an dem zweiten Ende des Gehäuses, und zumindest teilweise in das Gehäuse der Kupplungsmuffe eingeschoben, so dass zunächst der Ventilstößel der Kupplungsmuffe eine Kraft auf den - federbelasteten - Stößel des Kupplungssteckers ausübt, wodurch der Stößel des Kupplungssteckers in Richtung seiner Freigabeposition bewegt wird. Gleichzeitig übt der Steckergrundkörper mittelbar oder unmittelbar eine Kraft - parallel zur Kupplungsachse - auf die Druckhülse aus, so dass die Druckhülse durch die Kraft des Benutzers in Richtung ihrer Freigabeposition verschoben wird.

Der Kupplungsstecker weist in seinem Steckergrundkörper eine außenliegende Umfangsnut auf, in die in einer vorbestimmten Position radial in der Dichteinheit vorgesehene Sperrelemente, insbesondere Sperrkugeln, eintreten können. Die vorbestimmte Position ist dann erreicht, wenn die Umfangsnut des Steckergrundkörpers so weit in das Gehäuse der Kupplungsmuffe eingeschoben ist, dass die Umfangsnut mit den Sperrelementen fluchtend angeordnet ist.

Sobald die Sperrelemente in die Umfangsnut des Kupplungssteckers eintreten können, wird eine Bewegung der Dichteinheit - sofern diese verschiebbar ist -, die um ungekuppelten Zustand in ihrer ersten Position

an der Sperrhülse anliegt, freigegeben, so dass sich die gesamte Dichteinheit in Richtung des Gehäuseinnern - in die zweite Position der Dichteinheit - verschiebt, wodurch die Sperrelemente durch eine Sperrfläche der Sperrhülse in der Umfangsnut des Kupplungssteckers fixiert werden und eine formschlüssige Verbindung zwischen dem Kupplungsstecker und der Kupplungsmuffe hergestellt ist. Dabei wird gleichzeitig die Druckhülse in ihrer Öffnungsposition gehalten, so dass der Strömungskanal des Kupplungssteckers mit dem Strömungskanal der Kupplungsmuffe strömungstechnisch verbunden ist.

Zum Herstellen dieser formschlüssigen Verbindung zwischen der Kupplungsmuffe und dem Kupplungsstecker muss von einem Benutzer beim manuellen Kuppeln eine Kuppelkraft aufgebracht werden, die sich bei der Kupplungsmuffe bei einem im Strömungskanal anliegenden Druck p beispielsweise aus der Federkraft der auf die Druckhülse wirkenden Druckfeder, in Richtung der Schließposition der Druckhülse gerichteten Druckkräften, die aus dem auf die relevanten Flächen der Druckhülse wirkenden Druck p resultieren, als auch aus den druckabhängigen Reibungskräften der Bauteile in dem Gehäuse der Kupplungsmuffe zusammensetzt. Die Kuppelkraft des Kupplungssteckers setzt sich zusammen aus der Federkraft der Feder des federbelasteten Stößels und den Reibungskräften.

Die Kuppelkraft des Kupplungssteckers und der Kupplungsmuffe lässt sich erfindungsgemäß beispielsweise mit einem Verfahren bestimmen, bei dem ein Kupplungsstecker und eine Kupplungsmuffe in einem Messaufbau maschinell aufeinander zu bewegt werden und die erforderliche Kuppelkraft zum Zusammenfügen mit Kraftsensoren, insbesondere Dehnungsmessstreifen oder einem Kraftaufnehmer mit Piezo-Element, bestimmt wird.

Dazu werden die Kupplungsmuffe und der Kupplungsstecker mit einem Hydrauliköl gefüllt und verschlossen. Als Hydrauliköl eignet sich beispielsweise mineralisches Hydrauliköl des Typs HLP nach DIN 51524, Teil 2, (Stand: April 2006) aus der Viskositätsklasse ISO VG 46 gemäß DIN ISO 3448 (Stand: Februar 2010). Der Druck innerhalb des Kupplungssteckers entspricht dem Umgebungsdruck, während der Druck in der Kupplungsmuffe entsprechend dem Schwellenwert für den Druck für jede Messung angepasst wird und beispielsweise zwischen 0 MPa und 2 MPa beträgt. Zur Messung der Kuppelkraft werden der Kupplungsstecker und die Kupplungsmuffe in dem Messaufbau gegenüberliegend angeordnet und der Kupplungsstecker einer Geschwindigkeit von 40 mm pro Minute auf die Kupplungsmuffe zu bewegt, bis eine Verbindung hergestellt ist. Dazu wird eine Universal-Zug-Druck-Prüfmaschine (Typ 112.20N des Herstellers Test GmbH verwendet. Die Kraftaufnehmer der Prüfmaschine verwenden Dehnungsmessstreifen zur Bestimmung der Kraft. Die für den Kuppelvorgang erforderliche, gemessene maximale Kraft entspricht der Kuppelkraft des Kupplungssteckers und der Kupplungsmuffe. Um die Kuppelkraft der Kupplungsmuffe zu berechnen, muss die Kuppelkraft des Kupplungssteckers herausgerechnet werden, die üblicherweise mit 70 N bis 140 N abgeschätzt werden kann.

Erfindungsgemäß ist vorgesehen, dass die Größe der Flächen, insbesondere der Druckhülse, aus denen bei vorhandenem Druck p im Strömungskanal eine Kraft in Richtung der Schließposition der Druckhülse resultiert, so gewählt sind, dass bei einem vorbestimmten, oberen Druckwert des Drucks p ein vorbestimmter erster Schwellenwert für die Kuppelkraft der Kupplungsmuffe derart überschritten wird, um ein manuelles Herstellen einer formschlüssigen Verbindung mit einem Kupplungsstecker durch einen Benutzer zuverlässig zu verhindern. Die erfindungsgemäßen Randbedingungen gelten bei üblichen Betriebsdrücken von Hydraulikkupplungen, nämlich bei Drücken bis zu 42 MPa, insbesondere zwischen 25 MPa und 42 MPa. Die erfindungsgemäße Kupplungsmuffe hat vorzugsweise eine Nennweite 19, 16 oder 12,5.

Wenn die an eine Maschine über eine Hydraulikkupplung mit einer Kupplungsmuffe angeschlossenen Abnehmer, z. B. ein Werkzeug oder ein Anbaugerät, über ein Lastdruck-Melde-System (Load-Sensing System) der Maschine betrieben werden, dann wird der von der Pumpe gelieferte Volumenstrom über den am Abnehmer anstehenden Druck geregelt. Um ein solches System zu betreiben, muss zwischen Maschine und Abnehmer mindestens eine Messleitung, die das Drucksignal vom Abnehmer zur Maschine überträgt, eine Druckleitung, über die der Abnehmer mit unter Druck stehendem Fluid versorgt wird, und eine Tankleitung, über die das Fluid wieder zurück in den Tank der Maschine gefördert wird, angeordnet sein. Bei eingeschalteter Maschine liefert eine Pumpe mit 20 MPa bis 25 MPa Betriebsdruck einen Druck an der Kupplungsmuffe von ca. 2 MPa. Dieser Druck steht auch an, wenn vom Abnehmer keine hydraulische Leistung verbraucht wird. Wenn bei 2 MPa die Druckleitung gekuppelt würde, könnte der Abnehmer, z. B. ein Werkzeug, unter Umständen Bewegungen ausführen, die einerseits nicht gewünscht sind und andererseits den Benutzer gefährden. Deshalb ist es sinnvoll die Kupplungsmuffe so zu gestalten, dass ein manuelles Kuppeln bei einem Druck von 2 MPa innerhalb der Strömungsleitung nicht möglich ist. Es ist daher vorteilhaft vorgesehen, dass der obere Druckwert kleiner oder gleich 2 MPa, besonders bevorzugt kleiner als 1,5 MPa, insbesondere kleiner als 1 MPa ist.

Insbesondere werden erfindungsgemäß lediglich solche Flächen oder Flächenanteile bei der Wahl berücksichtigt, von denen tatsächlich eine wirkende Kraft resultiert. Solche Flächen oder Flächenanteile, auf die der Druck p zwar in Richtung der Schließposition wirkt, zu denen aber eine gleich große Fläche bzw. Flächenanteil existiert, auf den der Druck p ebenfalls wirkt und woraus eine Kraft in Richtung der Öffnungsposition der Druckhülse resultiert, werden nicht berücksichtigt, da sich diese Kräfte ausgleichen. Herangezogen werden folglich nur relevante Flächen, aus denen effektiv eine Kraft in Richtung der Schließposition resultiert. Die gewählte Größe der Flächen, also die gewählte Gesamtgröße aller Einzelflächen, bestimmt sich folglich als Differenz zwischen der Größe aller Flächen von denen überhaupt eine Kraft in Richtung der Schließposition resultiert, abzüglich der Flächen, von denen eine Kraft in entgegengesetzter Richtung resultiert. Die Druckhülse wird folglich so gestaltet, dass die Druckhülse Flächen mit der gewählten Größe aufweist, von denen bei im Strömungskanal anliegendem Druck eine Kraft in Richtung der Schließposition ausgeht.

Berücksichtigt werden bei der Konstruktion der Flächen der Druckhülse selbst, sowie zumindest teilweise die Flächen von an der Druckhülse vorhandenen Elementen, z. B. Dichtungen, von denen ebenfalls eine druckbedingte Kraft in Richtung der Schließrichtung auf die Druckhülse ausgeht. Beispielsweise von einer Dichtung, die in einer Nut in einem Außenumfang der Druckhülse angeordnet ist, kann eine Kraft auf die Druckhülse in Richtung der Schließposition wirken.

Die relevante Fläche, von der eine Kraft auf die Druckhülse in Richtung der Schließposition wirkt, wird insbesondere als Ringfläche berechnet, nämlich als Ringfläche, berechnet auf Basis der Differenz der Kreisfläche innerhalb des Innendurchmessers des Bauteils, in dem die Druckhülse in Längsrichtung geführt ist und an dem eine an der Druckhülse angeordnete Dichtung anliegt, also der dichtende Durchmesser an dem Bauteil, das die Druckhülse führt, sowie der Kreisfläche innerhalb des Innendurchmesser der Druckhülse im Bereich einer Dichtung am Ventilstößel, also der dichtende Durchmesser im Bereich des Ventilstößelkopfes, insbesondere dem Innendurchmesser an dem in Richtung der Schließposition gerichteten Endbereich der Druckhülse.

Der Innendurchmesser des Bauteils, in dem die Druckhülse geführt wird, wird deshalb bei der Berechnung berücksichtigt, weil die zu berücksichtigende Fläche der Dichtung, die zwischen der Druckhülse und dem die Druckhülse führenden Bauteil angeordnet ist, und von der eine Kraft auf die Druckhülse in Richtung der Schließposition resultiert, dann ebenfalls berücksichtigt wird. Wird die Größe der Ringfläche, also der Flächen von denen eine Kraft ausgeht, derart berechnet, werden automatisch die Flächen unberücksichtigt gelassen, auf die der Druck zwar wirkt, von denen aber keine Kraft in Richtung der Schließposition resultiert.

Die Größe der relevanten Flächen der Druckhülse und der an der Druckhülse angeordneten Bauelemente, insbesondere einer Dichtung, ist erfindungsgemäß so gewählt, dass bei einem oberen Druckwert die Kuppelkraft der Kupplungsmuffe mindestens so groß ist, also einen vorbestimmten Schwellenwert überschreitet, dass ein manuelles Einkuppeln eines Kupplungssteckers zuverlässig verhindert wird. Dazu kann beispielsweise der Durchmesser und/oder die Wandstärke der Druckhülse variiert werden. Die auf die relevanten Flächen der Druckhülse und der Dichtung wirkenden Kräfte haben einen wesentlichen Anteil an der aufzubringenden Kuppelkraft der Kupplungsmuffe, wobei dieser Anteil durch die gezielte Beaufschlagung der Druckhülse mit dem Druck durch die Wahl und Festlegung der Größe der Flächen weiter gesteigert wird.

Üblicherweise beträgt der erste Schwellenwert für die Kuppelkraft etwa 900 N, bevorzugt mindestens 1000 N, besonders bevorzugt mindestens 1200 N. Durch diese Wahl der Größe der Flächen der Druckhülse mit daran angeordneter Dichtung wird sichergestellt, dass ein Kuppelvorgang ab einem bestimmten Druckwert nicht mehr möglich ist und so auch ein Öffnen des Strömungskanals nicht erfolgen kann. Dadurch wird die Sicherheit für einen Benutzer gesteigert.

Ein Einkuppeln eines Kupplungssteckers, also das Herstellen einer formschlüssigen Verbindung, kann erst dann wieder erfolgen, wenn der Druck im Strömungskanal soweit reduziert worden ist, beispielsweise durch das Abstellen der Pumpe, dass der Druckwert den ersten Schwellenwert unterschreitet.

Die Wahl des oberen Druckwerts und des ersten Schwellenwerts für die Kuppelkraft der Kupplungsmuffe erfolgt stets unter Berücksichtigung der die Kuppelkraft ebenfalls beeinflussenden Faktoren, nämlich der die Kuppelkraft mitbeeinflussenden Feder- und Reibungskräfte. Eine abschließende und damit druckabhängige Steuerung der Kuppelkraft erfolgt allerdings durch die konstruktive Wahl der Größe der mit dem Druck p beaufschlagten Flächen, die eine Kraft auf die Druckhülse in Richtung ihrer Schließposition bewirken. Erfindungsgemäß erfolgt somit eine absichtliche Druckbeaufschlagung der Druckhülse, so dass die Kraft in Richtung der Schließposition gesteigert wird.

Ein Trennen der Kupplungsmuffe und des Kupplungssteckers erfolgt derart, dass eine Relativkraft, beispielsweise eine Zugkraft, zwischen Kupplungsstecker und Kupplungsmuffe aufgebracht wird, die verursacht, dass sich die Dichteinheit innerhalb des Gehäuses der Kupplungsmuffe aus ihrer zweiten Position, in der die formschlüssige Verbindung mit dem Kupplungsstecker sichergestellt ist, in ihre erste Position bewegt. In der ersten Position der Dichteinheit können die Sperrelemente umfänglich wieder in die Innennut, vorzugsweise in der Sperrhülse, eintreten, wodurch die Dichteinheit durch die Sperrelemente formschlüssig in ihrer ersten Position - Freigabeposition - gehalten wird.

Bei einem derartigen Trennvorgang erfolgt automatisch ein Schließen des Strömungskanals, indem die Druckhülse unter anderem von der Druckfeder aus ihrer Öffnungsposition in ihre Schließposition bewegt wird. Gleichzeitig wird im Laufe der Bewegung der Dichteinheit in Richtung der ersten Position bzw. des Kupplungssteckers aus der Kupplungsmuffe auch der federbelastete Stößel des Kupplungssteckers in seine Schließposition bewegt, so dass nach Abschluss des vollständigen Trennvorgangs sowohl der Kupplungsstecker als auch die Kupplungsmuffe abgesperrt sind.

Da sich der Druck im Leitungsabschnitt zwischen Pumpe und Kupplungsmuffe erfahrungsgemäß vollständig erst nach einer gewissen Zeit abbaut, ist ferner vorgesehen, dass das Einkuppeln bei geringen, muffenseitig anstehenden Drücken möglich ist. Dazu ist gemäß einer ersten Ausgestaltung vorgesehen, dass die Größe der Flächen, insbesondere der Druckhülse und der angeordneten Dichtung, von denen zumindest in der Schließposition der Druckhülse bei einem im Strömungskanal vorhandenen Druck p des Druckmittels zumindest mittelbar eine Kraft auf die Druckhülse in Richtung der Schließposition resultiert, derart gewählt ist, dass unterhalb eines vorbestimmten, unteren Druckwerts des Drucks p ein vorbestimmter zweiter Schwellenwert für die Kuppelkraft der Kupplungsmuffe unterschritten wird.

Durch die konstruktive Gestaltung - die Wahl - der Flächen, aus denen bei im Strömungskanal vorhandenem Druck p zumindest mittelbar eine Kraft auf die Druckhülse in Richtung der Schließposition resultiert, derart, dass bei einem oberen Druckwert ein Schwellenwert für die Kraft überschritten wird und dass gleichzeitig ab einem unteren Druckwert ein Schwellenwert für die Kuppelkraft unterschritten wird, wird sichergestellt, dass einerseits bei einem zu hohen Druck, von dem ein Sicherheitsrisiko für einen Benutzer ausgeht, ein Kuppeln zuverlässig verhindert wird, gleichzeitig aber gewährleistet wird, dass bei einem unteren Druckwert ein Einkuppeln eines Kupplungssteckers in die Kupplungsmuffe benutzerfreundlich und auf einfache Weise möglich ist. Einflussgröße, um diese Randbedingungen zu gewährleisten, ist dabei stets die Größe der Flächen, also die Summe aller relevanten Einzelflächen, von denen eine Kraft auf die Druckhülse in Richtung ihrer Schließposition resultiert.

Vorzugsweise beträgt der untere Druckwert 0,5 MPa, bevorzugt 0,3 MPa, besonders bevorzugt 0,25 MPa. Der zweite Schwellenwert für die Kuppelkraft beträgt beispielsweise 450 N, insbesondere aber 350 N, besonders bevorzugt 300 N.

Auch hier gilt, dass bei der konstruktiven Wahl der Flächen sowohl die Federkräfte der in der Kupplungsmuffe vorgesehenen Federn als auch die druckabhängigen Reibungskräfte innerhalb der beweglichen Bauteile der Kupplungsmuffe berücksichtigt werden müssen. Maßgebliches Mittel zum konstruktiven Einstellen der Kuppelkraft ist aber auch hier die Wahl der Größe und entsprechende konstruktive Gestaltung der Flächen der Druckhülse mit der daran angeordneten Dichtung, von denen bei anliegendem Druck eine Kraft in Richtung der Schließposition der Druckhülse resultiert.

Der Vorteil dieses Ausführungsbeispiels liegt darin, dass ein Einkuppeln bis zum Erreichen des unteren Druckwertes sehr komfortabel möglich und sichergestellt ist, und dass bei Erreichen des oberen Druckwertes ein manuelles Einkuppeln zuverlässig verhindert wird.

Als besonders vorteilhaft hat sich gemäß einer weiteren Ausgestaltung herausgestellt, wenn vorgesehen ist, dass die Kuppelkraft der Kupplungsmuffe bei einem oberen Druckwert von 1 MPa mindestens 800 N, bevorzugt mindestens 1000 N, besonders bevorzugt mindestens 1200 N beträgt. Durch die entsprechende Wahl der Flächen, insbesondere der Druckhülse, wird bei diesem Ausführungsbeispiel sichergestellt, dass bei einem im Strömungskanal anliegenden Druck p von 1 MPa eine Kuppelkraft von mindestens 800 N, insbesondere 1000 N, bevorzugt 1200 N, erreicht wird. Bei einer Kuppelkraft von 1200 N ist es auch für eine sehr kräftige Person nicht möglich, den Kupplungsstecker derart mit der Kupplungsmuffe zu verbinden, dass der Strömungskanal freigegeben wird. Ein Verbinden einer Kupplungsmuffe mit einem Kupplungsstecker ist folglich bei einem derartigen Druck unmöglich und wird dadurch sichergestellt, dass die Flächen, insbesondere der Druckhülse, derart gewählt sind, dass der Druck p über die konstruktiv gewählten Flächen eine besonders große Kraft auf die Druckhülse in Richtung der Schließposition bewirkt.

Eine komfortable Handhabung der Kupplungsmuffe wird dadurch sichergestellt, dass gemäß einem weiteren Ausführungsbeispiel vorgesehen ist, dass die Kuppelkraft bei einem unteren Druckwert von 0,5 MPa höchstens 450 N beträgt. Wenn folglich ein Druck p von 0,5 MPa im Strömungskanal der Kupplungsmuffe anliegt, ist durch die Wahl der Flächen der Druckhülse sichergestellt, dass die Kuppelkraft höchstens 450 N beträgt. Bevorzugt beträgt die unterhalb eines Druckes p von 0,3 MPa höchstens 350 N, bevorzugt unterhalb eines Druckes p von 0,25 MPa höchstens 300 N. Insbesondere ab 350 N ist eine Hydraulikkupplung erfahrungsgemäß ohne weiteres durch einen Benutzer von Hand zu kuppeln.

Um die Kupplungsmuffe weiter zu verbessern, ist gemäß einer weiteren Ausgestaltung vorgesehen, dass die Dichteinheit einen Muffeninnenkörper umfasst, und dass die Druckhülse von dem Muffeninnenkörper geführt ist. Vorteilhaft ist die Druckhülse in dem Muffeninnenkörper geführt. Der Muffeninnenkörper ist vorzugsweise an dem Muffenkörper befestigt. Vorteilhaft weist die Druckhülse in ihrem in Richtung des Muffeninnenkörpers gerichteten Außenumfangs eine Nut auf, wobei in der Nut eine Dichtung, insbesondere ein O-Ring, angeordnet ist. Ein zwischen Außenumfang der Druckhülse und des Innenumfangs des Muffeninnenkörpers, auf dem die Druckhülse geführt wird, ist ein Ringspalt vorhanden, der durch die Dichtung ausgefüllt ist. Auf die Fläche des Ringspalts, insbesondere auf die Dichtung in diesem Bereich, wirkt ein vorhandener Druck, wodurch - mittelbar - eine Kraft auf die Druckhülse in Richtung der Schließposition verursacht wird. Die Fläche des Ringspalts ist folglich eine relevante Fläche für die Kuppelkraft der Kupplungsmuffe, die bei der erfindungsgemäßen Konstruktion berücksichtigt wird. Die Berechnung erfolgt folglich unter Heranziehung des dichtenden Durchmessers im Bereich des Muffeninnenkörpers.

Die Kraftübertragung zwischen Druckhülse und Muffeninnenkörper lässt sich gemäß einer weiteren Ausgestaltung dadurch verbessern, dass vorgesehen ist, die Druckhülse einen ersten Vorsprung und der Muffeninnenkörper einen zweiten Vorsprung aufweist, und dass mit dem ersten Vorsprung und dem zweiten Vorsprung eine Kraft von der Druckhülse auf den Muffeninnenkörper, insbesondere eine in Richtung der Schließposition der Druckhülse wirkende Kraft, übertragbar ist. Der erste Vorsprung und der zweite Vorsprung sind vorzugsweise umlaufend ausgebildet, so dass eine gleichmäßige Kraftübertragung erfolgen kann. Der Vorteil dieses Ausführungsbeispiels besteht darin, dass die von der Druckhülse ausgehende Kraft über den Muffeninnenkörper in den Muffenkörper eingeleitet wird. Dadurch wird der Ventilstößel nicht mit zusätzlichen, insbesondere druckabhängigen, Kräften in axialer Richtung, also entlang der Kupplungsachse, belastet. Das ist deshalb von Vorteil, da die Druckhülse erfindungsgemäß gezielt mit druckabhängigen Kräften beaufschlagt wird.

Beispielsweise sind der erste Vorsprung und der zweite Vorsprung im unbelasteten Schließzustand und im Schließzustand bei Drücken unter 2 MPa in Richtung parallel zur Kupplungsachse zueinander beabstandet. Die Länge der Druckhülse ist dazu derart ausgebildet, dass die Druckhülse am Ventilstößel, insbesondere am Ventilstößelkopf, anliegt und der erste Vorsprung der zweite Vorsprung gleichzeitig zueinander beabstandet sind. Erst bei einem vorbestimmten Betriebszustand der Kupplungsmuffe, ab einem vorbestimmten Druck, wird der Ventilstößel durch druckabhängige Kräfte gelängt und die Druckhülse geweitet, wodurch der erste Vorsprung und der zweite Vorsprung zur Anlage kommen. Eine Kraftübertragung zwischen erstem Vorsprung und zweitem Vorsprung parallel zur Kupplungsachse erfolgt insbesondere erst ab Drücken innerhalb des Strömungskanals von mehr als 15 MPa, vorteilhaft mehr als 25 MPa, bevorzugt mehr als 35 MPa. Der übliche Betriebsdruck der Kupplungsmuffe liegt zwischen 25 MPa und 40 MPa, insbesondere 35 MPa, bevorzugt ist vorgesehen, dass der erste Vorsprung und der zweite Vorsprung ab einem Druck im Bereich zwischen dem 1,5-fachen und dem 2-fachen des vorgesehenen Betriebsdruckes zur Anlage kommen.

Eine weitere Ausgestaltung der Kupplungsmuffe sieht vor, dass die Druckhülse in dem Muffeninnenkörper an einer Führungsfläche geführt ist. Die Führungsfläche ist insbesondere eine rotationssymmetrische Innenfläche des Muffeninnenkörpers. Die Druckhülse ist entlang der Führungsfläche zwischen ihrer Schließposition und ihrer Öffnungsposition verschiebbar. Dabei ist zwischen dem Ventilstößel und der Druckhülse, insbesondere zwischen der Druckhülse und dem Ventilstößelkopf, eine Dichtung angeordnet, die im Schließzustand der Druckhülse eine Abdichtung sicherstellt. Vorzugsweise liegt die Dichtung zumindest teilweise an einem Innenumfang der Druckhülse an. Die Größe der Flächen, von denen zumindest in der Schließposition der Druckhülse bei einem im Strömungskanal vorhandenen Druck p des Druckmittels zumindest mittelbar eine Kraft auf die Druckhülse in Richtung der Schließposition resultiert, wird als Ringfläche bestimmt, nämlich berechnet aus der Differenz der Kreisfläche innerhalb des Innendurchmessers der Führungsfläche des Muffeninnenkörpers und der Kreisfläche innerhalb des Innendurchmessers der Druckhülse im Bereich der Dichtung an dem Ventilstößel. Berücksichtigt wird folglich der dichtende Durchmesser am Innenumfang des Muffeninnenkörpers und der dichtende Durchmesser am Ventilstößelkopf. Durch eine derartige Bestimmung der relevanten Fläche werden einerseits die Flächen unberücksichtigt gelassen, die eine Kraft in entgegengesetzter Richtung verursachen, andererseits wird die Fläche des Ringspalts zwischen Muffeninnenkörper und Druckhülse berücksichtigt, in dem über die dort angeordnete Dichtung eine Kraft auf die Druckhülse - mittelbar - in Richtung der Schließposition wirkt.

Für die Einflussnahme auf die Kuppelkraft der Kupplungsmuffe hat sich gemäß einer weiteren Herausgestaltung überraschenderweise als vorteilhaft herausgestellt, wenn vorgesehen ist, dass Ringfläche eine Größe zwischen 160 mm² und 350 mm² aufweist, insbesondere eine Fläche zwischen 210 mm² und 300 mm². Bei einer derartigen Wahl der Größe der Ringfläche kann auf einfache Weise sichergestellt werden, dass sowohl der erste Schwellenwert für die Kuppelkraft zuverlässig überschritten wird, als auch dass der zweite Schwellenwert für die Kuppelkraft bei einem vorbestimmten Druck zuverlässig unterschritten wird.

Als vorteilhaft für die Strömungseigenschaften der Kupplungsmuffe hat sich gemäß einer weiteren Ausgestaltung herausgestellt, wenn vorgesehen ist, dass die Druckhülse in ihrem Schließzustand zumindest mittelbar an dem Ventilstößel anliegt, so dass eine Kraft parallel zur Kupplungsachse von der Druckhülse auf den Ventilstößel übertragen wird. Vorzugsweise ist dazu zwischen Druckhülse und Ventilstößel, insbesondere dem Ventilstößelkopf, eine konische Abdichtung ausgebildet, indem die Druckhülse an einer konisch verlaufenden Fläche des Ventilstößels anliegt. Vorteilhaft ist ebenfalls an der Druckhülse eine konisch verlaufende Gegendichtfläche angeordnet, die im Schließzustand an der konisch verlaufenden Fläche des Ventilstößelkopfes zumindest teilweise anliegt. Dabei ist vorgesehen, dass die Fläche und die Gegendichtfläche eine übereinstimmende oder eine unterschiedliche Neigung aufweisen. Bei einer unterschiedlichen Neigung liegt die Gegendichtfläche insbesondere nur an einer Kante der Fläche am Ventilstößelkopf an, wodurch eine vorteilhafte Abdichtung erreicht wird.

Bevorzugt ist gemäß einer weiteren Ausgestaltung der Kupplungsmuffe vorgesehen, dass die Dichteinheit einen Muffengrundkörper und einen Kolben umfasst. Dabei ist der Kolben derart angeordnet, dass er relativ zum Muffengrundkörper, insbesondere auch zum Muffeninnenkörper, bewegbar ist. Ferner ist insbesondere eine Kolbenfeder vorgesehen, die zwischen Kolben und Muffeninnenkörper wirkt, und die eine Kraft auf den Kolben in Richtung einer Dichtposition bewirkt. Der Kolben ist zwischen einer Dichtposition und einer Entriegelungsposition bewegbar, wobei der Kolben bei einer Verschiebung von der Dichtposition in die Entriegelungsposition entlang der Kupplungsachse nach einem vorbestimmten Hub eine Kraft auf die Druckhülse ausübt, so dass die Kraft des Kolbens auf die Druckhülse in Richtung der Freigabeposition der Druckhülse wirkt.

Der Muffeninnenkörper und der Muffengrundkörper sind vorzugsweise fest mit dem Muffenkörper verbunden. Insbesondere ist auch die Stößelführung über den Muffeninnenkörper und/oder den Muffengrundkörper an dem Muffenkörper befestigt. Vorteilhafterweise ist der Muffengrundkörper mit dem Muffenkörper verschraubt, wobei gleichzeitig der Muffeninnenkörper und die Stößelführung zwischen dem Muffengrundkörper und dem Muffenkörper verspannt oder zwischen diesen schwimmend gelagert werden. Zwischen Muffengrundkörper und Muffeninnenkörper ist vorzugsweise mindestens eine Dichtung angeordnet, insbesondere in dem Bereich, in dem der Muffeninnenkörper von dem Muffengrundkörper gegen den Muffenkörper gespannt wird. Im ungekuppelten Zustand der Kupplungsmuffe ist der Kolben ein Teil der flachdichtenden Stirnfläche der Kupplungsmuffe - zweites Ende des Gehäuses -, so dass der Kolben zumindest mit einer Teilfläche in einer Ebene mit einer Stirnfläche des Ventilstößels liegt. Dadurch ist sichergestellt, dass ein Eintreten von Schmutz über die Stirnfläche der Kupplungsmuffe zuverlässig verhindert wird.

Der Kolben ist vorzugsweise zwischen Muffeninnenkörper und Muffengrundkörper gehalten und ist in Längsrichtung der Kupplungsmuffe entlang der Kupplungsachse - parallel zur Kupplungsachse - verschiebbar. Eine Verschiebung des Kolbens aus seiner Dichtposition in seine Entriegelungsposition erfolgt stets entgegen der Kraft der Kolbenfeder, die den Kolben in seine Dichtposition drängt, und die sich vorzugsweise am Muffeninnenkörper abstützt. Der Kolben weist insbesondere einen umlaufenden Ansatz auf, der mit einem zugehörigen Absatz am Muffengrundkörper zusammenwirkt und der die Lage des Kolbens in seiner Dichtposition definiert.

Zum Herstellen einer Verbindung mit einem Kupplungsstecker umfasst die Kupplungsmuffe eine Mehrzahl umfangsmäßig angeordneter Sperrelemente insbesondere Sperrkugeln, die im ungekuppelten Zustand jeweils mit einer Ausnehmung im Muffengrundkörper und einer korrespondierenden, umlaufenden Innennut in der Sperrhülse am Gehäuse derart zusammenwirken, dass die - verschiebbare - Dichteinheit in ihrer ersten Position festgelegt ist. Ein Heraustreten der Sperrelemente aus der Innenumfangsnut der Sperrhülse wird durch den Kolben in seiner Dichtposition verhindert.

Wird der Kolben aus seiner Dichtposition, beispielsweise durch das Einwirken eines Steckergrundkörpers eines Kupplungssteckers, entgegen der Kraft der Kolbenfeder aus seiner Dichtposition in Richtung seiner Entriegelungsposition gedrängt, wird nach einem vorbestimmten Hub zunächst die Ausnehmung im Muffengrundkörper mit den Sperrelementen freigegeben, wobei eine Bewegung der Sperrelemente zunächst noch durch den - eingebrachten - Steckergrundkörper eines Kupplungssteckers blockiert wird. Bei einem weiteren Hub des Kolbens in Richtung seiner Entriegelungsposition gelangt dieser an einen Vorsprung an der Druckhülse, mit dem er zusammenwirkt, so dass ab diesem Zeitpunkt die Bewegungen des Kolbens in Richtung seiner Entriegelungsposition und die Bewegung der Druckhülse in Richtung ihrer Freigabeposition gleichzeitig verlaufen, indem der Kolben die Druckhülse mitnimmt.

Bei einem weiteren Einbringen des Kupplungssteckers gelangt die Außennut des Steckergrundkörpers des Kupplungssteckers in übereinstimmende Lage mit den Sperrelementen, so dass die Sperrelemente aus der Innenumfangsnut der Sperrhülse durch die Ausnehmung im Muffengrundkörper in die Außenumfangsnut des Steckergrundkörpers eintreten können, wodurch eine Bewegung der Dichteinheit in Richtung des Gehäuseinnern - in ihre zweite Position - ermöglicht wird und somit der Formschluss zwischen Kupplungsstecker und Kupplungsmuffe bei gleichzeitiger Freigabe des Strömungskanals realisiert wird. Wenn sich die Druckhülse in ihrer Öffnungsposition befindet, befindet sich der Kolben in seiner Entriegelungsposition.

Vorteilhaft ist zwischen der Sperrhülse und dem Muffengrundkörper eine Hülsenfeder angeordnet, die im ungekuppelten Zustand der Kupplungsmuffe gespannt ist und die Dichteinheit in Richtung des Innern des Gehäuses - in die zweite Position - drängt. Die Bewegung der Dichteinheit wird dabei durch die Sperrelemente in der Innenumfangsnut der Sperrhülse blockiert und erst dann freigegeben, wenn die Sperrelemente in die Außenumfangsnut eines Kupplungssteckers eintreten können und so die Bewegung in der Dichteinheit freigeben.

In Bezug auf die Kraftverteilung innerhalb der Kupplungsmuffe hat es sich ferner als vorteilhaft herausgestellt, wenn gemäß einer weiteren Ausgestaltung vorgesehen ist, dass sich die mit der Druckhülse zusammenwirkende Druckfeder an der Stößelführung abstützt. Auch hier besteht der Vorteil darin, dass die Kraft der Druckfeder über die Stößelführung in den Muffenkörper eingeleitet wird. Die wesentlichen Kräfte in Bezug auf die Druckhülse werden von dem Muffeninnenkörper aufgenommen, der diese wiederum auf den Muffenkörper überträgt.

Die Betätigung der Kupplungsmuffe lässt sich gemäß einer weiteren Ausgestaltung vorteilhaft weiter vereinfachen, indem vorgesehen ist, dass zwischen Druckhülse und Ventilstößel eine Dichtung angeordnet ist, und dass das Material der Dichtung Polytetrafluorethylen (PTFE) oder Polyurethan (PU) oder ein Fluor-Kautschuk (FKM) ist. Durch die Wahl des Materials der Dichtung wird die Reibung zwischen Druckhülse und Ventilstößel reduziert, wobei gleichzeitig zuverlässig die Dichtfunktion sichergestellt wird. Weitere vorgesehene Materialien für die Dichtung sind Nitril-Butadien-Kautschuk (NBR) oder Hydrierte-Nitril-Butadien-Kautschuk (HNBR).

Die Bedienbarkeit der Kupplungsmuffe wird gemäß einer weiteren Ausgestaltung dadurch verbessert, dass zwischen Dichteinheit und Gehäuse ein Ausgleichsraum vorgesehen ist, dass der Ausgleichsraum mit dem Strömungskanal verbunden ist, und dass in dem Ausgleichsraum eine Hülsenfeder angeordnet ist. Dadurch, dass der Ausgleichsraum mit dem Strömungskanal verbunden ist, herrscht im Ausgleichsraum stets der gleiche Druck wie im Strömungskanal. Durch die im Ausgleichsraum mit Druck beaufschlagten Flächen, werden zumindest teilweise die auf die Dichteinheit wirkenden Kräfte, die aus dem Druck innerhalb des Strömungskanals resultieren, ausgeglichen, so dass ein Kupplungsstecker einfacher in die Kupplungsmuffe einkuppelbar ist. Die Hülsenfeder wirkt auf die Dichteinheit, insbesondere den Muffengrundkörper der Dichteinheit, derart, dass die Hülsenfeder eine Kraft auf die Dichteinheit in Richtung ihrer zweiten Position bewirkt. Die Hülsenfeder reduziert somit die Kuppelkraft, so dass die Kraft bzw. die Eigenschaften der Hülsenfeder bei der Wahl der Flächen der Druckhülse berücksichtigt werden muss.

Der Verlust von Druckmittel beim Kuppel- und Entkuppelvorgang lässt sich vorteilhafterweise weiter dadurch reduzieren, dass gemäß einer weiteren Ausgestaltung vorgesehen ist, dass am Gehäuse eine Abstreiferdichtung vorgesehen ist, und dass die Abstreiferdichtung zumindest teilweise am Kolben anliegt. Die Abstreiferdichtung ist vorzugsweise an der Sperrhülse des Gehäuses derart befestigt, dass sich der freie Dichtbereich stirnseitig an der freien Fläche der Kupplungsmuffe über die Stirnfläche des Muffengrundkörpers erstreckt. Ferner ist vorgesehen, dass die Abstreiferdichtung an dem Kolben zumindest teilweise anliegt, so dass die Abstreiferdichtung beim Einbringen eines Kupplungssteckers bzw. des Steckergrundkörpers ebenfalls am Steckergrundkörper anliegt, der nämlich beim Kuppelvorgang den Kolben aus seiner Dichtposition in die Entriegelungsposition verschiebt.

Die Kuppelkraft der Kupplungsmuffe lässt sich wie folgt abschätzen, so dass die Flächen, insbesondere der Druckhülse, konstruktiv gewählt werden können. Es gilt folgender Zusammenhang für die vom Druck abhängige Kuppelkraft $F_K(p)$ der Kupplungsmuffe:

$$F_K(p) = F_F + F_p(p) + F_R(p)$$

Dabei ist $F_F$ die Summe der wirkenden Federkräfte, $F_p(p)$ die druckabhängigen Kräfte auf die Druckhülse in Richtung der Schließposition und $F_R(p)$ die druckabhängigen Reibungskräfte in der Kupplungsmuffe. Dabei gilt ferner:

$$F_F = F_{KF} + F_D$$

Es ist $F_{KF}$ die Kraft der Kolbenfeder und $F_D$ die Kraft der Druckfeder. Dabei gilt auch:

$$F_p(p) = A_{DH} * p$$

Es ist $A_{DH}$ die Summe der relevanten Flächen, insbesondere der Druckhülse und der an der Druckhülse angeordneten Dichtung, von denen zumindest in der Schließposition der Druckhülse bei einem im Strömungskanal vorhandenen Druck p eines Druckmittels eine Kraft auf die Druckhülse in Richtung der Schließposition resultiert. Beispielsweise handelt es sich dabei um die Ringfläche, die unter Heranziehung der dichtenden Durchmesser berechnet wird. Ist zudem auch eine Hülsenfeder vorhanden, gilt:

$$F_F = F_{KF} + F_D - F_H$$

Dabei ist $F_H$ die Kraft der Hülsenfeder, die entgegen der weiteren Federkräfte wirkt.

In einer vorteilhaften Ausgestaltung ist eine erste, in Richtung der Öffnungsposition gerichtete Stirnfläche der Druckhülse größer, ist als eine zweite, in Richtung der Schließposition gerichtete Stirnfläche der Druckhülse. Gemeint ist dabei die jeweilige Stirnfläche der Druckhülse, berechnet unter Berücksichtigung des jeweiligen Außendurchmessers. Unter Berücksichtigung der bei den für Hydraulikkupplungen üblichen Drücken und zu berücksichtigenden Mindestwandstärken wird eine ausreichende, von dem im Strömungskanal anliegenden Druck p resultierende Kraft dadurch erreicht, dass die erste Stirnfläche der Druckhülse größer als die zweite Stirnfläche der Druckhülse ist.

Vorzugsweise ist die Wandstärke der Druckhülse an der ersten Stirnfläche größer als die Wandstärke an der zweiten Stirnfläche. Insbesondere ist die Wandstärke an der ersten Stirnfläche am größten in nimmt in Richtung der zweiten Stirnfläche, insbesondere stufenartig, ab.

Als besonders vorteilhaft hat sich gemäß einer ersten Ausgestaltung herausgestellt, wenn vorgesehen ist, dass das Flächenverhältnis der Größe der zweiten Stirnfläche zur Größe der ersten Stirnfläche zwischen 0,4 und 0,7 liegt, insbesondere zwischen 0,54 und 0,67. Daraus ergeben sich entsprechende Durchmesserverhältnisse der Außendurchmesser, also des Außendurchmessers an der zweiten Stirnfläche zum Außendurchmesser an der ersten Stirnfläche, die vorzugsweise im Bereich zwischen 0,7 und 0,85, insbesondere 0,74 und 0,82. Besonders bevorzugt beträgt das Flächenverhältnis bei einer Kupplungsmuffe mit der Nennweite 19 zwischen 0,62 und 0,72, insbesondere 0,67. Ferner bei einer Kupplungsmuffe mit der Nennweite 16 zwischen 0,55 und 0,65, insbesondere 0,6. Des Weiteren bei einer Kupplungsmuffe mit einer Nennweite 12,5 zwischen 0,49 und 0,61, insbesondere 0,54.

Mit derartigen Flächenverhältnissen kann auf zuverlässige Art und Weise sichergestellt werden, dass ein im Strömungskanal anliegender Druck bei einem oberen Druckwert zu einer ausreichend großen Kuppelkraft und bei einem unteren Druckwert zu einer minimalen Kuppelkraft führt.

In einer weiteren Ausgestaltung ist vorgesehen, dass zwischen Dichteinheit und Gehäuse im ungekuppelten Zustand der Kupplungsmuffe ein Ringraum vorhanden ist, dass die Dichteinheit im eingekuppelten Zustand der Kupplungsmuffe in den Ringraum verschoben ist, dass das Gehäuse mindestens eine Öffnung aufweist, und dass an die Öffnung eine Entkuppeleinheit angeschlossen ist, und dass die Entkuppeleinheit so eingerichtet und ausgebildet ist, dass der Ringraum mit einem unter Druck stehenden Medium beaufschlagbar ist. Der Ringraum ist derart konstruiert, dass er Flächen beinhaltet, von denen bei einer Druckbeaufschlagung eine Kraft auf die Dichteinheit resultiert, die in Richtung der ersten Position der Dichteinheit gerichtet ist.

Im eingekuppelten Zustand eines Kupplungssteckers ist die Dichteinheit der Kupplungsmuffe derart innerhalb des Gehäuses verschoben, dass der Ringraum vollständig oder nahezu vollständig von der Dichteinheit, insbesondere dem Muffenkörper der Dichteinheit, ausgefüllt wird - zweite Position der Dichteinheit. Um den Kupplungsstecker zu entkuppeln, muss die Dichteinheit, insbesondere entgegen der Kraft der Hülsenfeder, bewegt werden. Das erfolgt üblicherweise durch die Kraft eines Benutzers.

Erfindungsgemäß ist nun vorgesehen, dass der Ringraum über die Entkuppeleinheit mit einem unter Druck stehenden Medium beaufschlagbar ist, so dass die Dichteinheit bei Beaufschlagung des Ringraums mit einem unter Druck stehenden Medium in ihre erste Position gedrängt wird, so dass ebenfalls der Kupplungsstecker aus dem Eingriff mit der Kupplungsmuffe gepresst wird. Dadurch muss eine Kraft zum Entkuppeln der Hydraulikkupplung bzw. der Kupplungsmuffe nicht mehr durch den Benutzer aufgebracht werden, wodurch der Bedienkomfort gesteigert wird. Als unter Druck stehendes Medium ist insbesondere Druckluft vorgesehen, da Druckluft üblicherweise an land- und forstwirtschaftlichen Maschinen sowie Baumaschinen ohnehin vorhanden ist.

Als besonders vorteilhaft hat sich herausgestellt, wenn vorgesehen ist, dass die Entkuppeleinheit mindestens ein Ventil umfasst. Über das Ventil kann beispielsweise der Zu- und Abfluss des unter Druck stehenden Mediums in den Ringraum gesteuert werden.

Es hat sich ferner als vorteilhaft herausgestellt, wenn vorgesehen ist, dass die Entkuppeleinheit derart eingerichtet und ausgebildet ist, dass mit der Entkuppeleinheit die Dauer der Beaufschlagung des Ringraums mit einem unter Druck stehenden Medium steuerbar und/oder dass mit der Entkuppeleinheit die Menge des unter Druck stehenden Mediums im Ringraum steuerbar ist und/oder dass mit der Entkuppeleinheit der Druck des Mediums steuerbar ist.

Die Entkuppeleinheit ist derart eingerichtet und ausgebildet, dass der Ringraum beispielsweise über einen vorbestimmten Zeitraum mit einem unter Druck stehenden Medium beaufschlagt wird, so dass sichergestellt ist, dass die formschlüssige Verbindung zwischen Kupplungsstecker und Kupplungsmuffe aufgelöst wird, indem die Dichteinheit in ihre Ausgangslage gedrängt wird. Ferner ist auch vorgesehen, dass die Entkuppeleinheit derart eingerichtet und ausgebildet ist, dass der Ringraum mit einem bestimmten Volumen an Druckluft beaufschlagt wird, wobei das Volumen so gewählt ist, dass der Kupplungsstecker auf zuverlässige Weise aus der Kupplungsmuffe herausgedrängt wird.

Im Einzelnen gibt es nun eine Vielzahl von Möglichkeiten, die beschriebenen Kupplungsmuffen auszugestalten und weiterzubilden. Dazu wird verwiesen sowohl auf die dem Patentanspruch 1 nachgeordneten Patentansprüche, als auch auf die nachfolgende Beschreibung von bevorzugten Ausführungsbeispielen in Verbindung mit der Zeichnung. In der Zeichnung zeigen:

Fig. 1 Ein Ausführungsbeispiel einer Kupplungsmuffe und eines Kupplungssteckers in teilweise geschnittener Seitenansicht,

Fig. 2 das Ausführungsbeispiel gemäß Fig. 1 mit teilweise in die Kupplungsmuffe eingeführtem Kupplungsstecker,

Fig. 3 das Ausführungsbeispiel gemäß Fig. 1 und Fig. 2 mit weiter in die Kupplungsmuffe eingeführtem Kupplungsstecker,

Fig. 4 das Ausführungsbeispiel gemäß Fig. 1 bis 3 im eingekuppelten Zustand der Kupplungsmuffe,

Fig. 5a ein weiteres Ausführungsbeispiel einer Kupplungsmuffe in teilweise geschnittener Seitenansicht,

Fig. 5b der Ausschnitt Z gemäß Fig. 5a,

Fig. 6 ein weiteres Ausführungsbeispiel einer Kupplungsmuffe in teilweise geschnittener Seitenansicht,

Fig. 7 ein weiteres Ausführungsbeispiel einer Kupplungsmuffe in teilweise geschnittener Seitenansicht, und

Fig. 7a den Ausschnitt Z gemäß Fig. 7.

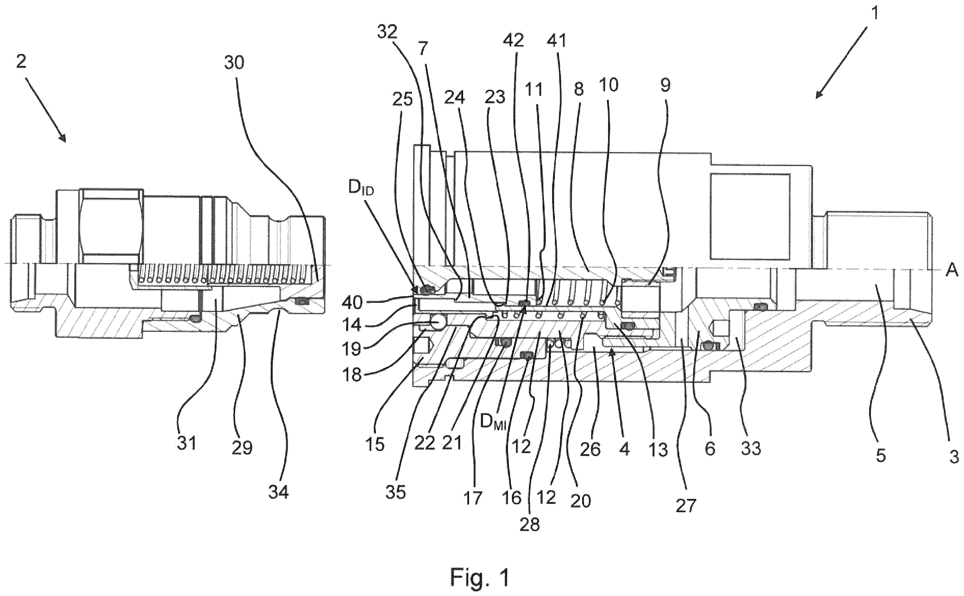

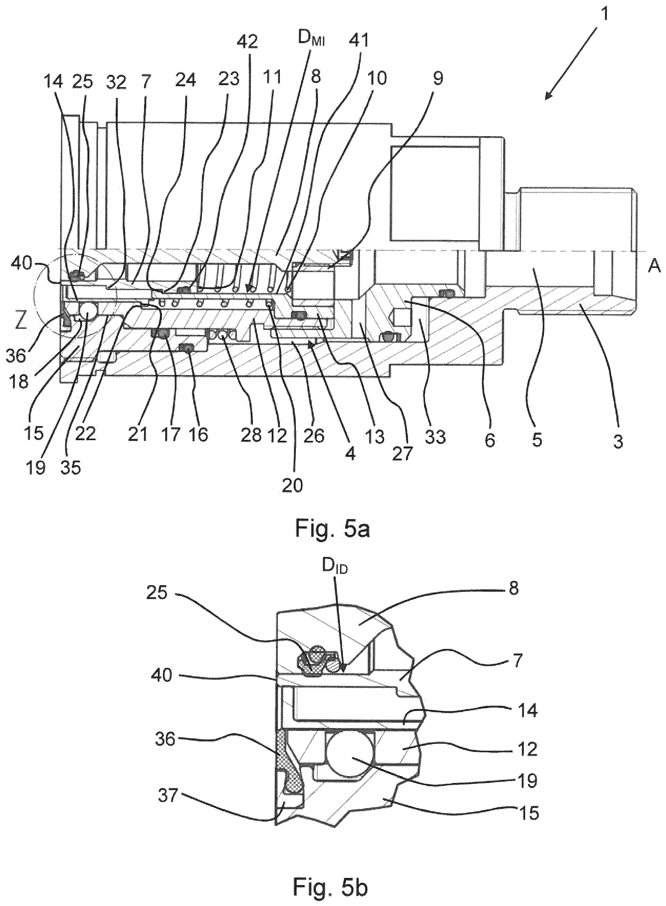

Fig. 1 bis 4 zeigen ein Ausführungsbeispiel einer Kupplungsmuffe 1 für eine Hydraulikkupplung, zum Herstellen einer formschlüssigen Verbindung mit einem Kupplungsstecker 2. Fig. 5a, 5b, Fig. 6 und Fig.7 zeigen ebenfalls jeweils ein Ausführungsbeispiel einer Kupplungsmuffe 2. Die Kupplungsmuffe 1 umfasst ein Gehäuse 3 mit einer Dichteinheit 4. Das Gehäuse 3 begrenzt einen Strömungskanal 5 für ein Dichtmittel, wobei sich das Gehäuse 3 rotationssymmetrisch um eine Kupplungsachse A erstreckt. Die Dichteinheit 4 umfasst einen Muffenkörper 6, eine Druckhülse 7 und einen Ventilstößel 8.

Der Ventilstößel 8 ist über eine Stößelführung 9 an dem Muffenkörper 6 derart gelagert, dass sich der Ventilstößel 8 zentral im Strömungskanal 5 befindet und der Strömungskanal 5 den Ventilstößel 8 umgibt. Die Stößelführung 9 weist eine Mehrzahl an Ausnehmungen auf, die von dem Druckmittel durchströmt werden und folglich ein Teil des Strömungskanals 5 sind. Die Druckhülse 7 ist derart angeordnet, dass sie den Ventilstößel 8 umgibt.

Gemäß Fig. 1 ist die Druckhülse 7 in ihrer Schließposition dargestellt, in der der Strömungskanal 5 durch die Druckhülse 7 vollständig verschlossen wird. Die Druckhülse 7 wird durch eine Druckfeder 10 in Richtung ihrer Schließposition belastet, wobei sich die Druckfeder 10 bei diesem Ausführungsbeispiel an der Stößelführung 9 abstützt. Die Fläche, von der zumindest in der Schließposition der Druckhülse 7 bei einem im Strömungskanal 5 vorhandenen Druck p eines Druckmittels eine Kraft auf die Druckhülse 7 in Richtung der Schließposition resultiert, kann bei diesem Ausführungsbeispiel als Ringfläche auf Basis der Differenz der Kreisfläche innerhalb des Innendurchmessers $D_{MI}$ des Muffeninnenkörpers 13 im Bereich der Dichtung 42 bzw. der Führungsfläche 41 und der Kreisfläche innerhalb des Innendurchmesser $D_{ID}$ der Druckhülse 7 im Bereich der Dichtung 25 berechnet werden. Diese Ringfläche, berechnet auf Basis der dichtenden Durchmesser $D_{MI}$ und $D_{ID}$, ist die Fläche - relevante Fläche - von der eine druckbedingte Kraft auf die Druckhülse 7 in Richtung der Schließposition wirkt. Bei diesem Ausführungsbeispiel ist die erste Stirnfläche 11 größer als die zweite Stirnfläche 40.

Die derart berechnete Fläche, nämlich die Ringfläche auf Basis der Differenz der Kreisflächen in den Durchmessern $D_{MI}$ und $D_{ID}$, ist bei diesem Ausführungsbeispiel derart bemessen, dass die aus einem im Strömungskanal 5 anliegenden Druck p resultierende Kraft in Richtung der Schließposition der Druckhülse 7 die Kuppelkraft der Kupplungsmuffe erhöht, so dass die Kuppelkraft bei einem oberen Druckwert des Drucks p einen ersten Schwellenwert überschreitet. Dadurch wird ein manuelles Einkuppeln eines Kupplungssteckers 2 zuverlässig verhindert und die Sicherheit für einen Benutzer erhöht. Die Fläche, hier die berechenbare Ringfläche, ist ferner derart bemessen, dass die Kuppelkraft ab einem unteren Druckwert des Drucks p einen vorbestimmten zweiten Schwellenwert unterschreitet.

Die Dichteinheit 4 umfasst ferner einen am Muffenkörper 6 befestigten Muffengrundkörper 12, den Muffeninnenkörper 13 und einen Kolben 14. Der Muffengrundkörper 12 und der Muffeninnenkörper 13 sind miteinander verbunden und derart am Muffenkörper 6 befestigt, dass die Stößelführung 9 zusammen mit dem Ventilstößel 8 im Strömungskanal 5 gehalten sind. Der Muffengrundkörper 12 ist dazu mit dem Muffenkörper 6 verschraubt. Die Dichteinheit 4 ist bei diesem Ausführungsbeispiel in dem Gehäuse 3 bewegbar gelagert, wobei sich die Dichteinheit 4 gemäß den Fig. 1 bis 3 in ihrer ersten Position befindet. Die Dichteinheit 4 ist zwischen dem Gehäuse 3 und einer - das offene, zweite Gehäuseende des Gehäuses 3 abschließenden - Sperrhülse 15 angeordnet.

Die Sperrhülse 15 ist über ein Gewinde mit dem Gehäuse 3 verschraubt und hält somit die Dichteinheit 4 innerhalb des Gehäuses 3. Zwischen der Sperrhülse 15 und dem Gehäuse 3 ist eine Dichtung 16 angeordnet. Ferner ist auch zwischen der Sperrhülse 15 und dem Muffengrundkörper 12 eine Dichtung 17 angeordnet. Die Sperrhülse 15 weist eine Innenumfangsnut 18 auf, die in der dargestellten ersten Position der Dichteinheit 4 zumindest teilweise die Sperrkugeln 19 aufnimmt, die umfänglich in Ausnehmungen des Muffengrundkörpers 12 gehalten sind. Der Kolben 14 fixiert die Sperrkugeln 19 in der ersten Position der Dichteinheit 4 in der Innenumfangsnut 18 der Sperrhülse 15, so dass die Dichteinheit 4 formschlüssig durch die Sperrkugeln 19 fixiert ist.

Zwischen dem Muffengrundkörper 12 und dem Muffeninnenkörper 13 ist ein Ringraum ausgebildet, in dem eine Kolbenfeder 20 angeordnet ist, die den Kolben 14 in seine - in Fig. 1 dargestellte - Dichtposition drängt, so dass der Kolben 14 zumindest teilweise mit der Stirnfläche des Ventilstößels 8, insbesondere des Ventilstößelkopfes, in einer Ebene liegt, nämlich in der Ebene der flachdichtenden Stirnfläche der Kupplungsmuffe 1. Der Kolben 14 weist einen ersten Absatz 21 auf, der mit einem zweiten Absatz 22 des Muffengrundkörpers 12 derart zusammenwirkt, dass die Absätze 21, 22 die Dichtposition des Kolbens 14 festlegen, wobei die Kolbenfeder 20 die Absätze 21, 22 zur gegenseitigen Anlage bringt.

Die Druckhülse 7 weist einen ersten Vorsprung 23 und der Muffeninnenkörper 13 einen zweiten Vorsprung 24 auf, die ebenfalls derart zusammenwirken, dass die Vorsprünge 23, 24 die Schließposition der Druckhülse 7 festlegen. Die Druckfeder 10 bewirkt, dass der Vorsprung 23 gegen den Vorsprung 24 gepresst wird. Die Vorsprünge 23, 24 haben den Vorteil, dass sich die Druckhülse 7 ausschließlich am Muffeninnenkörper 13 abstützt und keine axiale Kraftübertragung von der Druckhülse 7 auf den Ventilstößel 8 erfolgt.

In der in Fig. 1 dargestellten Schließposition umgibt die Druckhülse 7 den Ventilstößel 8 in seinem gegenüber seinem Schaft erweiterten Endbereich, dem Ventilstößelkopf, wobei der Strömungskanal 5 durch die Druckhülse 7 verschlossen wird. Eine Abdichtung erfolgt über eine in dem Ventilstößel 8 umfänglich angeordnete Dichtung 25, die bei diesem Ausführungsbeispiel aus Polytetrafluorethylen (PTFE) hergestellt ist

Zwischen der Dichteinheit 4 und dem Gehäuse 3, insbesondere zwischen dem Muffengrundkörper 12 und dem Muffenkörper 6 und dem Gehäuse 3 ist ein Ausgleichsraum 26 vorgesehen, der über mindestens eine Bohrung 27 mit dem Strömungskanal 5 verbunden ist, so dass im Ausgleichsraum 26 der im Strömungskanal 5 vorhandene Druck p vorherrscht. Der Ausgleichsraum 26 dient dem Ausgleich der aus dem anliegenden Druck p resultierenden Kräfte auf die Dichteinheit 4, insbesondere auf den Muffenkörper 6, wodurch die Bedienbarkeit der Kupplungsmuffe 1 vereinfacht wird.

In dem Ausgleichsraum 26 ist zwischen der Sperrhülse 15 und der Dichteinheit 4, insbesondere zwischen der Sperrhülse 15 und dem Muffengrundkörper 12 eine Hülsenfeder 28 angeordnet, die die Dichteinheit 4 in ihre zweite Position drängt. Im in Fig. 1 bis 3 dargestellten Zustand - erste Position - wird die Dichteinheit 4 allerdings durch die Sperrkugeln 19, die mit der Innenumfangsnut 18 der Sperrhülse 15 zusammenwirken, in ihrer ersten Position gehalten.

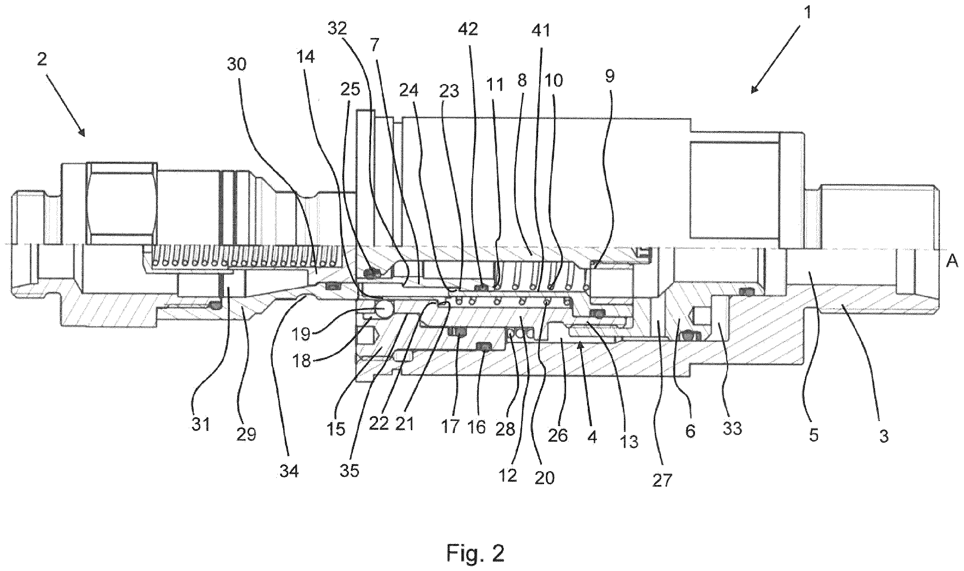

Fig. 2 zeigt das Ausführungsbeispiel gemäß Fig. 1 in dem Zustand, in dem der Kupplungsstecker 2 zum Zwecke der Herstellung einer formschlüssigen Verbindung zwischen Kupplungsstecker 2 und Kupplungsmuffe 1 an die flachdichtende Stirnfläche der Kupplungsmuffe 1 angesetzt wird. Der Steckergrundkörper 29 übt dabei zunächst eine Kraft auf den Kolben 14 aus, der in Richtung der Kupplungsachse A entgegen der Kraft der Kolbenfeder 20 in Richtung seiner Freigabeposition bewegt wird. Dabei bewirkt der Ventilstößel 8 der Kupplungsmuffe 2 eine Kraft auf den federbelasteten Stößel 30 des Kupplungssteckers 2.

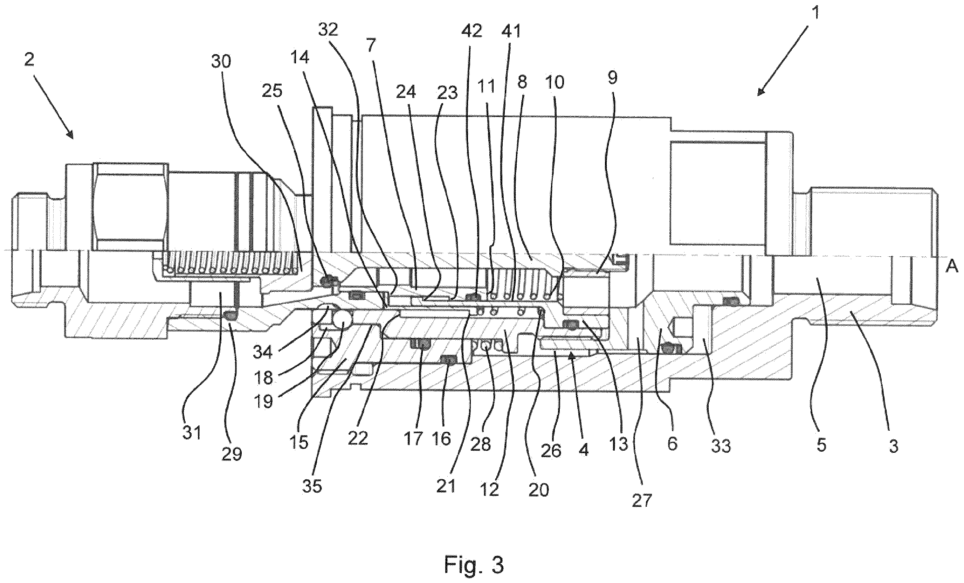

Wie insbesondere aus Fig. 3 ersichtlich ist, führt die Kraft des zunächst ortsfesten Ventilstößels 8 der Kupplungsmuffe 1 dazu, dass der Stößel 30 des Kupplungssteckers 2 derart bewegt wird, dass der Strömungskanal 31 des Kupplungssteckers 2 zumindest teilweise freigegeben wird. In der in Fig. 3 dargestellten Position der Druckhülse 7 ist der Strömungskanal 5 teilweise geöffnet. Durch die in Richtung der Kupplungsachse A über den Steckergrundkörper 29 auf den Kolben 14 aufgebrachte Kraft - parallel zur Kupplungsachse - ist der Kolben 14 weiter in das Gehäuse 3 hineingeschoben worden, so dass der Kolben 12 an einer Anlagefläche 32 an der Druckhülse 7 derart anliegt, dass die Druckhülse 7 von dem Kolben 14 weiter in Richtung ihrer Freigabeposition gedrängt wird, was wiederum entgegen der Kraft der Druckfeder 10 erfolgt.

Wie ferner aus Fig. 3 ersichtlich, ist zwischen Gehäuse 3 und der Dichteinheit 4, insbesondere zwischen dem Muffenkörper 6 und dem Gehäuse 3 ein Ringraum 33 vorhanden, in den die Dichteinheit 4, insbesondere der Muffenkörper 6, verschiebbar ist. Allerdings wird in dem Zustand gemäß Fig. 3 eine Bewegung der Dichteinheit 4 nach wie vor durch die Sperrkugeln 19 blockiert, die zwar nunmehr nicht mehr von dem Kolben 14 in ihrer Position gehalten werden, aber von dem Steckergrundkörper 29.

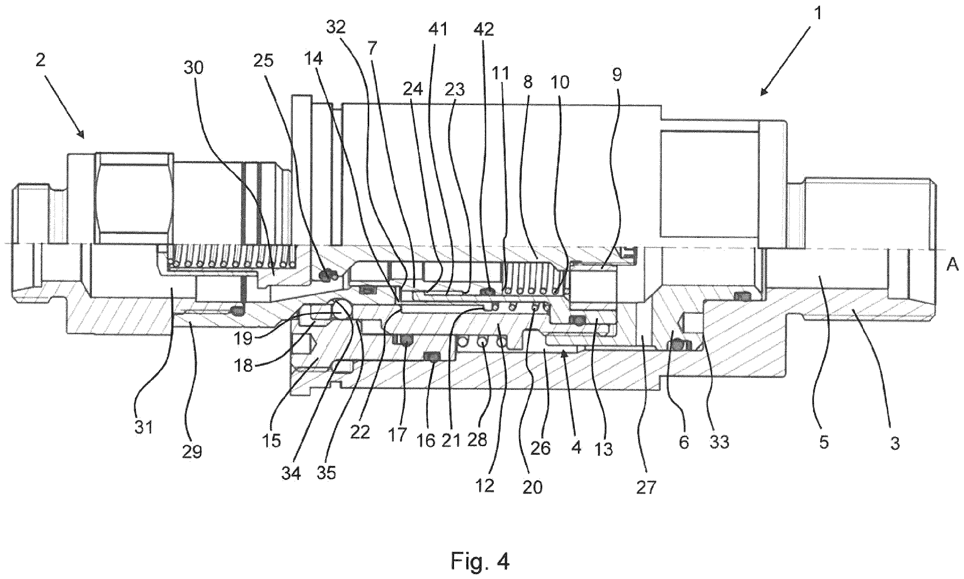

Aus Fig. 4 ist der vollständig eingekuppelte Zustand des Kupplungssteckers 2 in die Kupplungsmuffe 1 ersichtlich. Dadurch, dass die Sperrkugeln 19 in die Außenumfangsnut 34 des Kupplungssteckers 2 eingetreten sind, konnte die Dichteinheit 4 in Richtung ihrer zweiten Position verschoben werden, so dass nunmehr das Volumen des Ringraums 33 durch den Muffenkörper 6 reduziert worden ist. Die Dichteinheit 4 wird in dem Moment, wo ihre Bewegung aus der ersten Position in Richtung der zweiten Position durch die Sperrkugeln 19 freigegeben wird, durch die im Ausgleichsraum 13 vorhandene Hülsenfeder 28 in Richtung der zweiten Position gedrängt und anschließend in der zweiten Position gehalten. Die Sperrkugeln 19 sind dann aus der Innenumfangsnut 18 der Sperrhülse 15 herausgetreten und werden nun durch eine Sperrfläche 35 der Sperrhülse 15 in der Außenumfangsnut 34 des Kupplungssteckers 2 gehalten.

In der in Fig. 4 dargestellten, vollständig verriegelten Position ist der Steckergrundkörper 29 so weit in die Dichteinheit 4 bzw. die Kupplungsmuffe 1 eingedrungen, dass sich die Druckhülse 7 in ihrer Freigabeposition befindet. Der Strömungskanal 5 ist in diesem Zustand vollständig freigegeben und mit dem Strömungskanal 31 des Kupplungssteckers 2 strömungstechnisch verbunden.

Um den Kupplungsstecker 2 wieder von der Kupplungsmuffe 1 zu trennen, muss eine Relativkraft zwischen Kupplungsstecker 2 und Kupplungsmuffe 1 aufgebracht werden, die die Kraft der Hülsenfeder 28 und die Reibungskräfte, insbesondere der Dichtungen und Sperrkugeln 19, sowie die über die Sperrkugeln 19 übertragenden Klemmkräfte zwischen Steckergrundkörper 29 und Sperrhülse 15 überwindet, so dass sich die Dichteinheit 4 wieder in ihre erste Position bewegt, in der die Sperrkugeln 19 wieder in die Innenumfangsnut 18 der Sperrhülse 15 eintreten können und der Kupplungsstecker 2 freigegeben wird.

Gleichzeitig folgen sowohl die federbelastete Druckhülse 7 als auch der federbelastete Kolben 14 der rückwärtigen Bewegung des Kupplungssteckers 2, so dass zunächst der Strömungskanal 5 der Kupplungsmuffe 1 durch die Druckhülse 7 geschlossen wird, wobei anschließend der Strömungskanal 31 des Kupplungssteckers 2 durch den Stößel 30 geschlossen wird, nachdem der Ventilstößel 8 der Kupplungsmuffe 1 keine Kraft mehr auf den Stößel 30 bewirkt.

Fig. 5a zeigt ein Ausführungsbeispiel einer Kupplungsmuffe 2, die im Wesentlichen gemäß den Ausführungsbeispielen der Fig. 1 bis 4 ausgebildet ist, allerdings mit dem Unterschied, dass an der Sperrhülse 15 eine Abstreiferdichtung 36 angeordnet ist. Die Funktionsweise der Ausführungsbeispiele ist übereinstimmend, die Bauteile sind mit identischen Bezugszeichen gekennzeichnet. Auch bei diesem Ausführungsbeispiel ist die erste Stirnfläche 11 größer als die zweite Stirnfläche 40. Der Bereich Z der Fig. 5a ist in Fig. 5b vergrößert dargestellt.

Die Abstreiferdichtung 36 ist derart an der Sperrhülse 15 befestigt, dass sie sich stirnseitig über die Stirnfläche des Muffengrundkörpers 12 erstreckt und einen Teil der flachdichtenden Stirnfläche der Kupplungsmuffe 1 bildet. Die Abstreiferdichtung 36 ist mit einem Klemmelement 37 an der Sperrhülse 15 gehalten. Die Abstreiferdichtung 36 liegt mit ihrer freien Dichtfläche an dem Kolben 14 an, so dass die Abstreiferdichtung 36 auch an dem Steckergrundkörper 29 eines Kupplungssteckers 2 anliegt, wenn dieser in die Kupplungsmuffe 1 eingeführt wird.

Der Vergrößerung gemäß Fig. 5b ist die genaue Ausgestaltung der Dichtung 25 zwischen Druckhülse 7 und Ventilstößel 8 zu entnehmen, die bei diesem Ausführungsbeispiel aus einem Fluor-Kautschuk (FKM) ausgebildet ist.

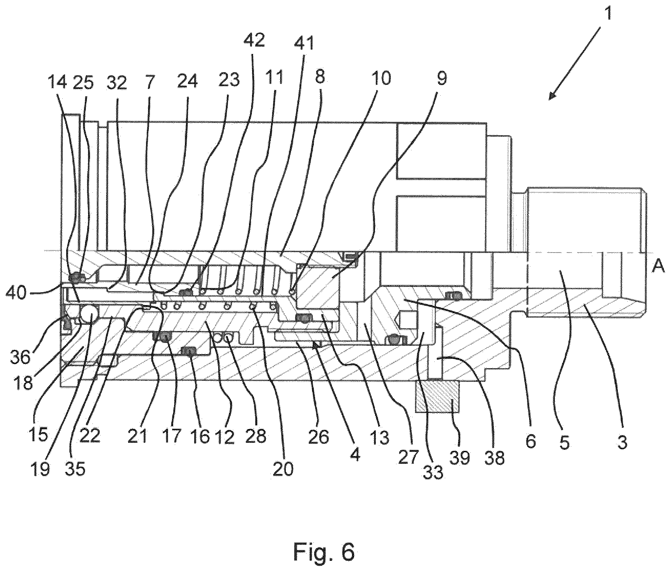

Fig. 6 zeigt ein Ausführungsbeispiel einer Kupplungsmuffe 2, das identisch zu dem Ausführungsbeispiel gemäß Fig. 5a ausgebildet ist, mit der Ausnahme, dass der Ringraum 33 eine Öffnung 38 aufweist, und dass an der Öffnung 38 eine Entkuppeleinheit 39 angeordnet ist, so dass der Ringraum 33 zum Zwecke des Entkuppelns mit einem unter Druck stehenden Medium, insbesondere Druckluft, beaufschlagbar ist. Die Entkuppeleinheit 39 umfasst mindestens ein Ventil, mit dem der Zu- und Abfluss des unter Druck stehenden Mediums in den Ringraum 33 steuerbar ist.

Vorzugsweise wird der Ringraum 33 über die Entkuppeleinheit 39 mit einem unter Druck stehenden Medium beaufschlagt, so dass die Dichteinheit 4, die sich im eingekuppelten Zustand eines Kupplungssteckers 2 in ihrer zweiten Position befindet - siehe beispielsweise Fig. 4 - durch das unter Druck stehende Medium in Richtung ihrer ersten Position - entgegen der Kraft der Hülsenfeder 28 und der Reibungskräfte, insbesondere der Dichtungen und Sperrkugeln 19, sowie der über die Sperrkugeln 19 übertragenden Klemmkräfte zwischen Steckergrundkörper 29 und Sperrhülse 15 - gedrängt wird, indem das unter Druck stehende Medium über die für die Wirkung des Druckes relevanten Flächen des Ringgraums 33 eine Kraft auf die Dichteinheit 4, insbesondere den Muffenkörper 6, bewirkt. Durch die verursachte Bewegung der Dichteinheit 4 in Richtung ihrer ersten Position wird gleichzeitig der Kupplungsstecker 2 aus der Kupplungsmuffe 1 gedrückt, so dass ein entkuppeln erfolgt.

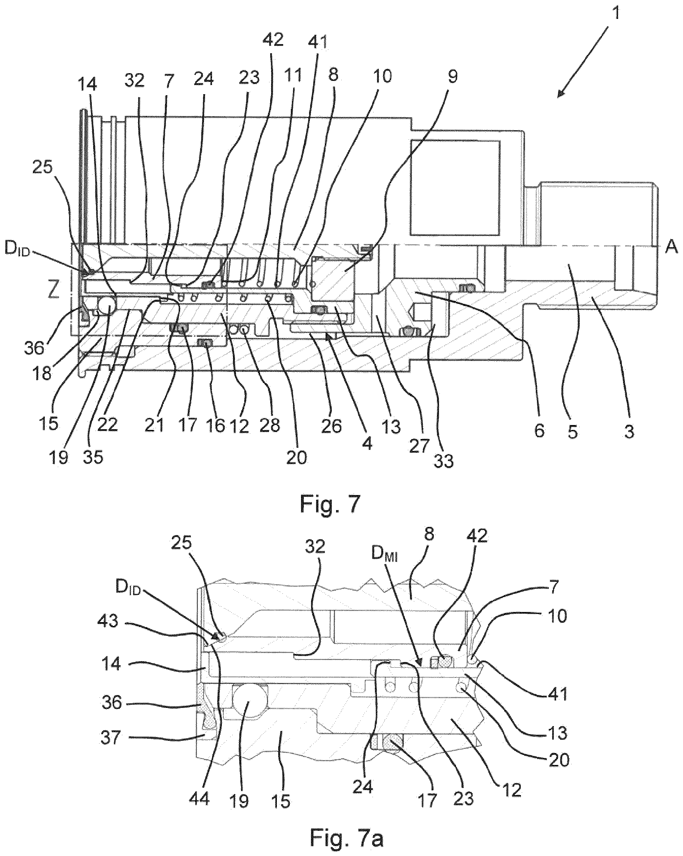

Fig. 7 zeigt ein weiteres Ausführungsbeispiel einer Kupplungsmuffe 1 in teilweise geschnittener Seitenansicht. Die Funktionsweise ist ähnlich zu der Funktionsweise des Ausführungsbeispiels gemäß Fig. 1, so dass die Bauteile mit identischen Bezugszeichen gekennzeichnet sind. Bei diesem Ausführungsbeispiel sind allerdings die Druckhülse 7 und der Ventilstößel 8, insbesondere der Ventilstößelkopf, derart ausgebildet, dass die Druckhülse 7 in ihrer Schließposition derart an dem Ventilstößelkopf anliegt, dass die Druckhülse 7 eine Kraft auf den Ventilstößelkopf parallel zur Kupplungsachse A bewirkt. Der Bereich Z am Ventilstößelkopf ist in Fig. 7a vergrößert dargestellt.

Der Ventilstößelkopf weist eine geneigte Fläche 43 auf, an der die Druckhülse 7 mit einer ebenfalls geneigten Gegendichtfläche 44 in ihrer dargestellten Schließposition anliegt. Die Neigung der Fläche 43 und der Gegendichtfläche 44 ist bei diesem Ausführungsbeispiel identisch. Um die Dichtfunktion zu steigern, ist zudem eine Dichtung 25 in der Fläche 43 angeordnet. Die Druckhülse 7 ist derart ausgebildet, insbesondere nämlich die Länge der Druckhülse 7 so gewählt, dass der Vorsprung 23 im dargestellten, drucklosen Schließzustand der Druckhülse 7 von dem Vorsprung 24 beabstandet ist. Eine Kraftübertragung von der Druckhülse 7 von Kräften parallel zur Kupplungsachse A erfolgt nur auf den Ventilstößel 8, insbesondere den Ventilstößelkopf. Erst am einem vorbestimmten Druck innerhalb des geschlossenen Strömungskanals, durch dessen Wirkung der Ventilstößel 8 gelängt wird und die Druckhülse 7 sich weitet, kommen die Vorsprünge 23, 24 zur gegenseitigen Anlage, wodurch eine Kraftübertragung von der Druckhülse 7 auf den Muffeninnenkörper 13 erfolgt und somit der Ventilstößel 8 entlastet wird. Die Vorsprünge 23, 24 kommen vorteilhaft ab einem Druck zwischen dem 1,5-fachen und dem 2-fachen des Betriebsdrucks zur Anlage.

Die Ringfläche, von der bei im Strömungskanal vorhandenem Druck p eine druckabhängige Kraft auf die Druckhülse 7 in Richtung ihrer Schließposition wirkt, kann bei diesem Ausführungsbeispiel als Differenz der Kreisfläche innerhalb des Innendurchmessers $D_{MI}$ an der Führungsfläche 41 des Muffeninnenkörpers 13 und der Kreisfläche innerhalb des Innendurchmessers $D_{ID}$ der Druckhülse 7 im Bereich der Dichtung 25 berechnet werden.

## Patentansprüche

1. Kupplungsmuffe (1) für eine Hydraulikkupplung an einer Druckmittelleitung, zum Herstellen einer formschlüssigen Verbindung mit einem Kupplungsstecker (2), mit einem Gehäuse (3), und einer Dichteinheit (4), wobei das Gehäuse (3) einen Strömungskanal (5) für ein Druckmittel und eine Kupplungsachse A aufweist, wobei die Dichteinheit (4) einen Muffenkörper (6), eine Druckhülse (7) und einen Ventilstößel (8) umfasst, wobei die Dichteinheit (4) einen Teil des Strömungskanals (5) begrenzt, wobei der Ventilstößel (8) über eine Stößelführung (9) derart am Muffenkörper (6) gehalten ist, dass der Ventilstößel (8) im Strömungskanal (5) angeordnet ist, wobei die Druckhülse (7) den Ventilstößel (8) umgibt, wobei die Druckhülse (7) entlang der Kupplungsachse A verschiebbar zwischen einer Schließposition, in der der Strömungskanal (5) durch die Druckhülse (7) verschlossen wird, und einer Öffnungsposition, in der der Strömungskanal (5) durch die Druckhülse (7) freigegeben ist, gehalten ist, wobei die Druckhülse (7) durch eine Druckfeder (10) in Richtung ihrer Schließposition belastet ist, und wobei zur Herstellung einer formschlüssigen Verbindung mit einem Kupplungsstecker (2) durch einen Benutzer eine Kuppelkraft aufgebracht werden muss,

**dadurch gekennzeichnet, dass**
die Größe der Flächen, von denen zumindest in der Schließposition der Druckhülse (7) bei einem im Strömungskanal (5) vorhandenen Druck p eines Druckmittels eine Kraft auf die Druckhülse (7) in Richtung der Schließposition resultiert, derart gewählt ist, dass ab einem vorbestimmten, oberen Druckwert des Drucks p ein vorbestimmter erster Schwellenwert der Kuppelkraft überschritten wird, um ein Herstellen einer formschlüssigen Verbindung mit einem Kupplungsstecker (2) durch einen Benutzer zu verhindern.

2. Kupplungsmuffe (1) nach Anspruch 1,
**dadurch gekennzeichnet, dass**
die Größe der Flächen, von denen zumindest in der Schließposition der Druckhülse (7) bei einem im Strömungskanal vorhandenen Druck p des Druckmittels eine Kraft auf die Druckhülse (7) in Richtung der Schließposition resultiert, derart gewählt ist, dass unterhalb eines vorbestimmten, unteren Druckwerts des Drucks p ein vorbestimmter zweiter Schwellenwert für die Kuppelkraft unterschritten wird.

3. Kupplungsmuffe (1) nach Anspruch 1 oder 2,
**dadurch gekennzeichnet, dass**
die Kuppelkraft ab einem oberen Druckwert von 1 MPa mindestens 800 N beträgt, bevorzugt mindestens 1.000 N beträgt, besonders bevorzugt mindestens 1.200 N beträgt.

4. Kupplungsmuffe (1) nach Anspruch 2 oder 3,
**dadurch gekennzeichnet, dass**
die Kuppelkraft unterhalb eines unteren Druckwerts von 0,35 MPa höchstens 450 N beträgt, insbesondere unterhalb eines Druckwerts von 0,2 MPa höchstens 350 N beträgt.

5. Kupplungsmuffe (1) nach einem der vorhergehenden Ansprüche,
**dadurch gekennzeichnet, dass**
die Dichteinheit (4) ferner einen Muffeninnenkörper (12) umfasst, und dass die Druckhülse (7) von dem Muffeninnenkörper (12) geführt ist, insbesondere dass die Druckhülse (7) einen ersten Vorsprung (23) und der Muffeninnenkörper (13) einen zweiten Vorsprung (24) aufweist, und dass mit dem ersten Vorsprung (23) und dem zweiten Vorsprung (24) eine Kraft von der Druckhülse (7) auf den Muffeninnenkörper (13) übertragbar ist.

6. Kupplungsmuffe (1) nach Anspruch 5,
**dadurch gekennzeichnet, dass**
die Druckhülse (7) in dem Muffeninnenkörper (13) an einer Führungsfläche (41) geführt ist, dass zwischen Ventilstößel (8) und Druckhülse (7) eine Dichtung (25) angeordnet ist, und dass die Größe der Flächen, von denen zumindest in der Schließposition der Druckhülse (7) bei einem im Strömungskanal vorhandenen Druck p des Druckmittels eine Kraft auf die Druckhülse (7) in Richtung der Schließposition resultiert, als Ringfläche auf Basis der Differenz der Kreisfläche innerhalb des Innendurchmessers ($D_{MI}$) der Führungsfläche (41) und der Kreisfläche innerhalb des Innendurchmessers ($D_{ID}$) der Druckhülse (7) im Bereich der Dichtung (25) berechnet wird, insbesondere dass die Ringfläche eine Größe zwischen 160 mm² und 350 mm² aufweist, insbesondere eine Größe zwischen 210 mm² und 300 mm² aufweist.

7. Kupplungsmuffe (1) nach einem der vorhergehenden Ansprüche,
**dadurch gekennzeichnet, dass**
die Druckhülse (7) in ihrem Schließzustand zumindest mittelbar an dem Ventilstößel (8) anliegt, so dass eine Kraft parallel zur Kupplungsachse A von der Druckhülse (7) auf den Ventilstößel (8) übertragen wird.

8. Kupplungsmuffe (1) nach einem der vorhergehenden Ansprüche,
**dadurch gekennzeichnet, dass**
die Dichteinheit (4) einen Muffengrundkörper (12) und einen Kolben (14) umfasst, dass der Kolben (14) derart angeordnet ist, dass der Kolben (14) relativ zum Muffengrundkörper (12) bewegbar ist, dass der Kolben (14) zwischen einer Dichtposition und einer Entriegelungsposition bewegbar ist, dass der Kolben (14) bei einer Verschiebung von der Dichtposition in die Entriegelungsposition entlang der Kupplungsachse nach einem vorbestimmten Hub eine Kraft auf die Druckhülse (7) ausübt, und dass die Kraft des Kolbens (14) auf die Druckhülse (7) in Richtung der Freigabeposition der Druckhülse (7) wirkt, insbesondere dass eine Abstreiferdichtung (36) umfasst ist, und dass die Abstreiferdichtung (36) mit ihrem Dichtbereich zumindest teilweise am Kolben (14) anliegt.

9. Kupplungsmuffe (1) nach einem der vorhergehenden Ansprüche,
**dadurch gekennzeichnet, dass**
sich die mit der Druckhülse (7) zusammenwirkende Druckfeder (10) an der Stößelführung (9) abstützt und/oder dass zwischen Druckhülse (7) und Ventilstößel (8) eine Dichtung (25) angeordnet ist, und dass das Material der Dichtung Polytetrafluorethylen (PTFE) oder Polyurethan (PU) oder ein Fluor-Kautschuk (FKM) ist.

10. Kupplungsmuffe (1) nach einem der vorhergehenden Ansprüche,
**dadurch gekennzeichnet, dass**
dass zwischen Dichteinheit (4) und Gehäuse (3) ein Ausgleichsraum (26) vorgesehen ist, dass der Ausgleichsraum (26) mit dem Strömungskanal (5) verbunden ist, und dass in dem Ausgleichsraum (26) eine Hülsenfeder (28) angeordnet ist.

11. Kupplungsmuffe (1) nach einem der vorhergehenden Ansprüche, **dadurch gekennzeichnet, dass** folgender Zusammenhang für die vom Druck abhängige Kuppelkraft F_K (p) besteht:

$$F_K(p) = F_F + F_p(p) + F_R(p)$$

wobei F_F die wirkenden Federkräfte F_p(p) die druckabhängigen Kräfte auf die Druckhülse in Richtung der Schließposition und F_R(p) die druckabhängigen Reibungskräfte in der Kupplungsmuffe sind, wobei gilt:

$$F_F = F_{KF} + F_D$$

wobei F_KF die Kraft der Kolbenfeder und F_D die Kraft der Druckfeder ist, wobei

$$F_p(p) = A_{DH} * p$$

,wobei A_DH die Fläche ist, von der zumindest in der Schließposition der Druckhülse (7) bei einem im Strömungskanal (5) vorhandenen Druck p eines Druckmittels eine Kraft auf die Druckhülse (7) in Richtung der Schließposition resultiert.

12. Kupplungsmuffe nach Anspruch 10 und 11, **dadurch gekennzeichnet, dass** gilt:

$$F_F = F_{KF} + F_D - F_H$$

wobei F_H die Kraft der Hülsenfeder ist.

13. Kupplungsmuffe (1) nach einem der vorhergehenden Ansprüche, **dadurch gekennzeichnet, dass** die Dichteinheit (4) entlang der Kupplungsachse A verschiebbar in dem Gehäuse (3) gehalten ist, dass zwischen Dichteinheit (4) und Gehäuse (3) im ungekuppelten Zustand der Kupplungsmuffe (1) ein Ringraum (33) vorhanden ist, dass die Dichteinheit (4) im eingekuppelten Zustand der Kupplungsmuffe (1) in den Ringraum (33) verschoben ist, dass das Gehäuse (3) mindestens eine Öffnung (38) aufweist, und dass an die Öffnung (38) eine Entkuppeleinheit (39) angeschlossen ist, und dass die Entkuppeleinheit (39) so eingerichtet und ausgebildet ist, dass der Ringraum (33) mit einem unter Druck stehenden Medium beaufschlagbar ist.

14. Kupplungsmuffe (1) nach Anspruch 1, **dadurch gekennzeichnet, dass** die Druckhülse (7) eine erste, in Richtung der Öffnungsposition gerichtete Stirnfläche (11), und eine zweite, in Richtung der Schließposition gerichtete Stirnfläche (40), aufweist, **wobei** die erste Stirnfläche (11) größer als die zweite Stirnfläche (40) ist.

15. Kupplungsmuffe (1) nach Anspruch 13, **dadurch gekennzeichnet, dass** die Entkuppeleinheit (39) mindestens ein Ventil umfasst und/oder dass die Entkuppeleinheit (39) derart eingerichtet und ausgebildet ist, dass mit der Entkuppeleinheit (39) die Dauer der Beaufschlagung des Ringraums (33) mit einem unter Druck stehenden Medium steuerbar und/oder dass mit der Entkuppeleinheit (39) die Menge des unter Druck stehenden Mediums im Ringraum (33) steuerbar ist und/oder dass mit der Entkuppeleinheit (39) der Druck des Mediums steuerbar ist.

**Claims**

1. Coupling sleeve (1) for a hydraulic coupling on a pressure medium line for establishing a form-fitting connection with a coupling plug (2), with a housing (3) and a sealing unit (4), wherein the housing (3) has a flow channel (5) for a pressure medium and a coupling axis A, wherein the sealing unit (4) comprises a sleeve body (6), a pressure sleeve (7) and a valve tappet (8), wherein the sealing unit (4) delimits a part of the flow channel (5), wherein the valve tappet (8) is held via a tappet guide (9) at the sleeve body (6) in such a manner that the valve tappet (8) is arranged in the flow channel (5), wherein the pressure sleeve (7) surrounds the valve tappet (8), wherein the pressure sleeve (7) is held to be displaceable along the coupling axis A between a closing position, in which the flow channel (5) is closed by the pressure sleeve (7) and an opening position, in which the flow channel (5) is released by the pressure sleeve (7), wherein the pressure sleeve (7) is loaded by a compression spring (10) in the direction of its closing position and wherein for establishing a form-fitting connection with a coupling plug (2) by a user a coupling force must be applied, **characterised in that** the size of the areas from which, at least in the closing position of the pressure sleeve (7) with a pressure p of a pressure medium existing in the flow channel (5), results a force onto the pressure sleeve (7) in the direction of the closing position, is selected in such a manner that from a predetermined, upper pressure value of the pressure p, a predetermined first threshold value of the coupling force is exceeded in order to prevent an establishment of a form-fitting connection with a coupling plug (2) by a user.

2. Coupling sleeve (1) according to claim 1,
   **characterised in that**
   the size of the areas from which, at least in the closing position of the pressure sleeve (7) with a pressure p of the pressure medium existing in the flow channel (5), results a force onto the pressure sleeve (7) in the direction of the closing position, is selected in such a manner that below a predetermined, lower pressure value of the pressure p a predetermined second threshold for the coupling force is undershot.

3. Coupling sleeve (1) according to claim 1 or 2
   **characterised in that**
   the coupling force from an upper pressure value of 1 MPa is at least 800 N, preferably at least 1,000 N, particularly preferably at least 1,200 N.

4. Coupling sleeve (1) according to claim 2 or 3,
   **characterised in that**
   the coupling force below a lower pressure value of 0.35 MPa is at most 450 N, particularly below a pressure value of 0.2 MPa it is at most 350 N.

5. Coupling sleeve (1) according to one of the previous claims,
   **characterised in that**
   the sealing unit (4) also comprises a sleeve inner body (12) and that the pressure sleeve (7) is guided by the sleeve inner body (12), in particular that the pressure sleeve (7) has a first projection (23) and the sleeve inner body (13) has a second projection (24) and that with the first projection (23) and the second projection (24) a force can be transmitted from the pressure sleeve (7) onto the sleeve inner body (13).

6. Coupling sleeve (1) according to claim 5,
   **characterised in that**
   the pressure sleeve (7) is guided in the sleeve inner body (13) on a guide surface (41), that between valve tappet (8) and pressure sleeve (7) a seal (25) is arranged and that the size of the areas from which, at least in the closing position of the pressure sleeve (7) with a pressure p of the pressure medium existing in the flow channel (5), results a force onto the pressure sleeve (7) in the direction of the closing position, is calculated as an annular surface on the basis of the difference between the circular surface inside the inner diameter ($D_{MI}$) of the guide surface (41) and the circular surface inside the inner diameter ($D_{ID}$) of the pressure sleeve (7) in the area of the seal (25), in particular that the annular surface has a size between 160 mm$^2$ and 350 mm$^2$, in particular a size between 210 mm$^2$ and 300 m$^2$.

7. Coupling sleeve (1) according to one of the previous claims,
   **characterised in that**
   the pressure sleeve (7) in its closing position at least indirectly bears on the valve tappet (8), so that a force is transmitted from the pressure sleeve (7) onto the valve tappet (8) parallel to the coupling axis A.

8. Coupling sleeve (1) according to one of the previous claims,
   **characterised in that**
   the sealing unit (4) comprises a sleeve base body (12) and a piston (14), that the piston (14) is arranged in such a manner that the piston (14) is movable relative to the sleeve base body (12), that the piston (14) is movable between a sealing position and an unlocking position, that the piston (14), during a displacement from the sealing position into the unlocking position along the coupling axis, after a predetermined stroke exerts a force onto the pressure sleeve (7) and that the force of the piston (14) acts on the pressure sleeve (7) in the direction of the release position of the pressure sleeve (7), particularly that a wiper seal (36) is comprised and that the wiper seal (36) at least partially bears on the piston (14) with its sealing area.

9. Coupling sleeve (1) according to one of the previous claims,
   **characterised in that**
   the compression spring (10) which cooperates with the pressure sleeve (7) is supported at the tappet guide (9) and/or that between pressure sleeve (7) and valve tappet (8) a seal (25) is arranged and that the material of the seal is polytetrafluoroethylene (PTFE) or polyurethane (PU) or a fluoro rubber (FKM).

10. Coupling sleeve (1) according to one of the previous claims,
    **characterised in that**
    between sealing unit (4) and housing (3) a compensation chamber (26) is provided, that the compensation chamber (26) is connected to the flow channel (5) and that in the compensation chamber (26) a sleeve spring (28) is arranged.

11. Coupling sleeve (1) according to one of the previous claims,
    **characterised in that**
    the correlation for the coupling force $F_K(p)$ dependent on the pressure is as follows:

$$F_K(p) = F_F + F_p(p) + F_R(p)$$

wherein $F_F$ are the acting spring forces, $F_p(p)$ the pressure-dependent forces on the pressure sleeve in the direction of the closing position and $F_R(p)$ the pressure-dependent frictional forces in the coupling sleeve, wherein:

$$F_F = F_{KF} + F_D$$

wherein $F_{KF}$ is the force of the piston spring and $F_D$ is the force of the compression spring, wherein

$$F_p(p) = A_{DH} * p$$

wherein $A_{DH}$ is the area from which, at least in the closing position of the pressure sleeve (7) with a pressure p of a pressure medium provided in the flow channel (5), results a force onto the pressure sleeve (7) in the direction of the closing position.

12. Coupling sleeve according to claims 10 and 11, **characterised in that**

$$F_F = F_{KF} + F_D - F_H$$

wherein $F_H$ is the force of the sleeve spring.

13. Coupling sleeve (1) according to one of the previous claims
**characterised in that**
the sealing unit (4) along the coupling axis A is displaceably held in the housing (3), that between sealing unit (4) and housing (3) in the uncoupled state of the coupling sleeve (1) an annular space (33) is provided, that the sealing unit (4) is moved into the annular space (33) in the coupled state of the coupling sleeve (1), that the housing (3) has at least one opening (38) and that an uncoupling unit (39) is connected to the opening (38) and that the uncoupling unit (39) is set up and designed in such a manner that the annular space (33) is loadable with a pressurised medium.

14. Coupling sleeve (1) according to claim 1,
**characterised in that** the pressure sleeve (7) has a first end face (11) directed in the direction of the opening position and a second end face (40) directed in the direction of the closing position, wherein the first end face (11) is larger than the second end face (40).

15. Coupling sleeve (1) according to claim 13,
**characterised in that**
the uncoupling unit (39) comprises at least one valve and/or that the uncoupling unit (39) is set up and designed in such a manner that with the uncoupling unit (39) the duration of the exposure of the annular space (33) to a pressurised medium is controllable and/or that with the uncoupling unit (39) the amount of the pressurised medium in the annular space (33) is controllable and/or that with the uncoupling unit (39) the pressure of the medium is controllable.

## Revendications

1. Manchon d'accouplement (1) pour accouplement hydraulique contre une conduite de fluide sous pression, permettant d'établir une liaison par adhérence de formes avec un raccord mâle (2), comprenant un boîtier (3) et une unité d'étanchéité (4),
sachant que le boîtier (3) présente un conduit d'écoulement (5) pour fluide sous pression et un axe d'accouplement A,
sachant que l'unité d'étanchéité (4) comprend un corps (6) de manchon, une douille de compression (7) et un poussoir (8) de vanne,
sachant que l'unité d'étanchéité (4) limite une partie du conduit d'écoulement (5),
sachant que le poussoir (8) de vanne est maintenu via un guidage (9) de poussoir contre le corps (6) de manchon de sorte que le poussoir (8) de vanne est disposé dans le conduit d'écoulement (5),
sachant que la douille de compression (7) entoure le poussoir (8) de vanne,
sachant que la douille de compression (7) est maintenue déplaçable le long de l'axe d'accouplement A entre une position de fermeture sur laquelle le conduit d'écoulement (5) est obturé par la douille de compression (7), et une position d'ouverture sur laquelle le conduit d'écoulement (5) est dégagé par la douille de compression (7),
sachant que la douille de compression (7) se trouve sous la contrainte d'un ressort (10) la poussant vers sa position de fermeture,
et sachant que, pour établir une liaison par adhérence de formes avec un raccord mâle (2), une force d'accouplement doit être exercée par un utilisateur,
**caractérisé en ce que**
la taille des surfaces, dont résulte - au moins lorsque la douille de compression (7) se trouve sur la position de fermeture en présence de la pression p d'un fluide sous pression dans le conduit d'écoulement (5) - une force exercée sur la douille de compression (7) en direction de la position de fermeture, est choisie de telle manière qu'à partir d'une valeur supérieure prédéfinie de la pression p une première valeur seuil prédéfinie de la force d'accouplement est franchie par excès pour empêcher l'établissement par un utilisateur d'une liaison par adhérence de formes avec un raccord mâle (2).

2. Manchon d'accouplement (1) selon la revendication 1,
**caractérisé en ce que**
la taille des surfaces, dont résulte - au moins lorsque la douille de compression (7) se trouve sur la position de fermeture en présence de la pression p du fluide sous pression dans le conduit d'écoulement - une force exercée sur la douille de compression (7) en direction de la position de fermeture, est choisie de telle manière qu'en dessous d'une valeur inférieure prédéfinie de la pression p une deuxième valeur seuil prédéfinie de la force d'accouplement est franchie par défaut.

3. Manchon d'accouplement (1) selon la revendication 1 ou 2,
**caractérisé en ce que**
la force d'accouplement à partir d'une valeur de pression supérieure de 1 MPa s'élève au moins à 800 N, de préférence au moins à 1 000 N et de manière particulièrement préférentielle au moins à 1 200 N.

4. Manchon d'accouplement (1) selon la revendication 2 ou 3,
**caractérisé en ce que**
la force d'accouplement en dessous d'une valeur de pression inférieure de 0,35 MPa s'élève au maximum à 450 N, et que notamment en dessous d'une valeur de pression de 0,2 MPa elle s'élève au maximum à 350 N.

5. Manchon d'accouplement (1) selon l'une des revendications précédentes,
**caractérisé en ce que**
l'unité d'étanchéité (4) en outre comprend un corps intérieur (12) de manchon et que la douille de compression (7) est guidée par le corps intérieur (12) du manchon, notamment **en ce que** la douille de compression (7) présente une première saillie (23) et que le corps intérieur (13) de manchon présente une deuxième saillie (24), et **en ce que** la première saillie (23) et la deuxième saillie (24) permettent de transmettre une force de la douille de compression (7) au corps intérieur (13) du manchon.

6. Manchon d'accouplement (1) selon la revendication 5,
**caractérisé en ce que**
la douille compression (7) est guidée dans le corps intérieur (13) du manchon contre une surface de guidage (41),
entre le poussoir (8) de vanne et la douille de compression (7) est disposé un joint (25),
et **en ce que** la taille des surfaces, dont résulte - au moins lorsque la douille de compression (7) se trouve sur la position de fermeture en présence de la pression p du fluide sous pression dans le conduit d'écoulement - une force exercée sur la douille de compression (7) en direction de la position de fermeture, est calculée comme surface annulaire sur la base de la différence entre la surface circulaire à l'intérieur du diamètre intérieur ($D_{MI}$) de la surface de guidage (41) et la surface circulaire à l'intérieur du diamètre intérieur ($D_{ID}$) de la douille de compression (7) dans la zone du joint (25),
notamment **en ce que** la surface annulaire est comprise entre 160 mm$^2$ et 350 mm$^2$, notamment entre 210 mm$^2$ et 300 mm$^2$.

7. Manchon d'accouplement (1) selon l'une des revendications précédentes,
**caractérisé en ce que**
la douille de compression (7) lorsqu'à l'état fermé applique au moins indirectement contre le poussoir (8) de vanne de sorte que parallèlement à l'axe d'accouplement A une force est transmise de la douille de compression (7) au poussoir (8) de vanne.

8. Manchon d'accouplement (1) selon l'une des revendications précédentes,
**caractérisé en ce que**
l'unité d'étanchéité (4) comprend un corps de base (12) de manchon et un piston (14),
le piston (14) est disposé de sorte que le piston (14) soit déplaçable relativement au corps de base (12) du manchon,
le piston (14) est déplaçable entre une position d'étanchéité et une position de déverrouillage,
le piston (14) exerce - lors d'un déplacement de la position d'étanchéité vers la position de déverrouillage le long de l'axe d'accouplement - après une course prédéfinie, une force sur la douille de compression (7),
et **en ce que** la force du piston (14) sur la douille de compression (7) agit en direction de la position d'autorisation de la douille de compression (7), notamment **en ce qu'**un joint racleur (36) est ceinturé,
et **en ce que** le joint racleur (36) applique au moins partiellement, par sa zone d'étanchéité, contre le piston (14).

9. Manchon d'accouplement (1) selon l'une des revendications précédentes,
**caractérisé en ce que**
le ressort de compression (10) interagissant avec la douille de compression (7) s'appuie contre le guidage (9) du poussoir et/ou qu'entre la douille de compression (7) et le poussoir (8) de vanne est disposé un joint (25), et que le matériau du joint est du polytétrafluoréthylène (PTFE) ou du polyuréthane (PU) ou un caoutchouc fluoré (FKM).

10. Manchon d'accouplement (1) selon l'une des revendications précédentes,
**caractérisé en ce que**
entre l'unité d'étanchéité (4) et le boîtier (3) est prévu un compartiment compensateur (26),
**en ce que** le compartiment compensateur (26) est relié avec le conduit d'écoulement (5),
et **en ce que** dans le compartiment compensateur (26) est disposé un ressort (28) de douille.

11. Manchon d'accouplement (1) selon l'une des revendications précédentes,
    **caractérisé en ce que**
    la relation suivante s'applique à la force d'accouplement $F_K(p)$ dépendante de la pression :

    $$F_K(p) = FF + F_p(p) + F_R(p)$$

    sachant que $F_F$ représente les forces ressort, $F_p(p)$ les forces dépendantes de la pression s'exerçant sur la douille de compression en direction de la position de fermeture, et $F_R(p)$ les forces de friction dépendantes de la pression dans le manchon d'accouplement, sachant que s'applique la relation :

    $$F_F = F_{KF} + F_D$$

    sachant que $F_{KF}$ représente la force du ressort de piston et $F_D$ la force du ressort de compression, sachant que

    $$F_p(p) = A_{DH} * p,$$

    sachant que $A_{DH}$ est la surface dont résulte - au moins lorsque la douille de compression (7) se trouve sur la position de fermeture en présence de la pression p d'un fluide sous pression dans le conduit d'écoulement (5) - une force exercée sur la douille de compression (7) en direction de la position de fermeture.

12. Manchon d'accouplement selon les revendications 10 et 11,
    **caractérisé en ce que**
    s'applique la relation :

    $$F_F = F_{KF} + F_D - F_H$$

    sachant que $F_H$ est la force du ressort de douille.

13. Manchon d'accouplement (1) selon l'une des revendications précédentes,
    **caractérisé en ce que**
    l'unité d'étanchéité (4) est maintenue déplaçable le long de l'axe d'accouplement A dans le boîtier (3),
    **en ce qu'**entre l'unité d'étanchéité (4) et le boîtier (3), un compartiment annulaire (33) est présent lorsque le manchon d'accouplement (1) se trouve à l'état découplé,
    **en ce que** l'unité d'étanchéité (4) est déplacée vers l'intérieur du compartiment annulaire (33) lorsque le manchon d'accouplement (1) se trouve à l'état accouplé,
en ce que le boîtier (3) présente au moins un orifice (38),
et **en ce qu'**à l'orifice (38) est raccordée une unité de découplage (39),
et **en ce que** l'unité de découplage (39) est ajustée et configurée de sorte que le compartiment annulaire (33) puisse être pressurisé à l'aide d'un fluide se trouvant sous pression.

14. Manchon d'accouplement (1) selon la revendication 1,
    **caractérisé en ce que**
    la douille de compression (7) présente une première surface frontale (11) regardant en direction de la position d'ouverture, et une deuxième surface frontale (40) regardant en direction de la position de fermeture, sachant que la première surface frontale (11) est plus grande que la deuxième surface frontale (40).

15. Manchon d'accouplement (1) selon la revendication 13,
    **caractérisé en ce que**
    l'unité de découplage (39) comprend au moins une vanne et/ou que l'unité de découplage (39) est ajustée et configurée de telle sorte que l'unité de découplage (39) permet de piloter la durée de la pressurisation du compartiment annulaire (33) avec un fluide se trouvant sous pression et/ou **en ce que** l'unité de découplage (39) permet de piloter la quantité de fluide présent sous pression dans le compartiment annulaire (33) et/ou **en ce que** l'unité de découplage (39) permet de piloter la pression du fluide.

Fig. 1

EP 3 377 798 B1

Fig. 2

Fig. 3

EP 3 377 798 B1

Fig. 4

Fig. 5a

Fig. 5b

Fig. 6

Fig. 7

Fig. 7a

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1273844 B1

- FR 1577931 A